# EUROPÄISCHE PATENTSCHRIFT

(11) **EP 3 387 727 B1**
(45) Veröffentlichungstag und Bekanntmachung des Hinweises auf die Patenterteilung: **08.07.2020**
(21) Anmeldenummer: 16816232.9
(22) Anmeldetag: 09.12.2016
(51) Int. Cl.: H02J 3/38, H02J 7/35

(54) **VERFAHREN ZUM BEREITSTELLEN EINER ENERGIERESERVE FÜR EINE ENERGIEVERSORGUNGSANLAGE**
METHOD FOR PROVIDING AN ENERGY RESERVE FOR A POWER SUPPLY SYSTEM
PROCÉDÉ DE PRÉPARATION D'UNE RÉSERVE D'ÉNERGIE POUR UNE INSTALLATION D'ALIMENTATION EN ÉNERGIE

(30) Priorität: 11.12.2015 EP 15199489
(43) Veröffentlichungstag der Anmeldung: 17.10.2018
(73) Patentinhaber: Fronius International GmbH, 4643 Pettenbach (AT)
(72) Erfinder: KASBERGER, Christian, 4730 Waizenkirchen (AT); WOLF, Martin, 4614 Marchtrenk (AT); HOFER, Harald, 4650 Lambach (AT); HEIGL, Hannes, 4716 Hofkirchen an der Trattnach (AT)
(74) Vertreter: Isarpatent
(86) Internationale Anmeldenummer: PCT/EP2016/080407
(87) Internationale Veröffentlichungsnummer: WO 2017/097967

(56) Entgegenhaltungen:
- EP-A1- 2 485 359
- EP-A1- 2 571 138
- US-A1- 2012 229 077
- US-A1- 2013 241 495
- US-A1- 2014 094 979

## Beschreibung

Die Erfindung betrifft ein Verfahren zum Bereitstellen einer Energiereserve bei einer Energieversorgungsanlage und insbesondere eine Steuereinheit für eine Energieversorgungsanlage, die geeignet ist, Energie aus einem Energieversorgungsnetz zu beziehen oder in ein Energieversorgungsnetz einzuspeisen.

US 2013/241495 A1 offenbart ein Steuersystem für ein Energiespeichersystem mit einem Energieerzeugungssystem, einem Energiespeicher, einem Verbraucher und einem angeschlossenen Energieversorgungsnetz.

Intelligentes Energiemanagement gewinnt zunehmend an Bedeutung, insbesondere bei der Nutzung erneuerbarer Ressourcen zur Energiegewinnung. Für die Versorgung von Nutzern bzw. Verbrauchern mit Energie, vor allem mit elektrischer Energie, wird zunehmend Energie aus erneuerbaren Ressourcen, vor allem aus Sonnenlicht, Windkraft oder Wasserkraft gewonnen. Dabei erfolgt die Energieerzeugung zunehmend zumindest teilweise dezentral, wobei Nutzer bzw. Verbraucher nicht nur Energie verbrauchen, sondern auch selbst erzeugen und in ein Energieverteilungsnetz bzw. Stromnetz einspeisen. Hierbei wird erzeugte Energie, welche ein Nutzer bzw. Verbraucher aus einer erneuerbaren Energiequelle gewinnt und die der jeweilige Nutzer momentan nicht benötigt, in ein Energieverteilungsnetz, beispielsweise ein öffentliches Niederspannungsnetz, eingespeist. Eine Photovoltaikanlage kann in Abhängigkeit von der Tageszeit und den momentanen Wetterbedingungen aus Sonnenlicht elektrischen Strom gewinnen, den der erzeugende Nutzer zum Zeitpunkt der Erzeugung nicht bzw. nicht vollständig verbraucht. Da die dezentrale Energieerzeugung mit erneuerbaren Energiequellen, wie beispielsweise Sonnenlicht oder Windkraft, Limitierungen in ihrer Verfügbarkeit haben, verfügen Energieversorgungsanlagen zunehmend über lokale Energiespeichereinheiten zur Speicherung von Energie. Dies erlaubt es, den momentan entstehenden Energieüberschuss lokal in der Energiespeichereinheit der Energieversorgungsanlage zwischenzuspeichern und die zwischengespeicherte Energie zu einem späteren Zeitpunkt entweder in das Energieversorgungsnetz einzuspeisen oder der lokalen Energieverbrauchseinheit zum Verbrauch zuzuführen. Mit zunehmendem Anteil der erneuerbaren Energiequellen an der Energieerzeugung nimmt die Abhängigkeit des Nutzers bzw. Verbrauchers, welcher die Energieversorgungsanlage betreibt, sowie die Abhängigkeit des Netzbetreibers von externen kaum oder nicht beeinflussbaren Ereignissen, beispielsweise Wetteränderungen oder Leitungsunterbrechungen, stark zu. Die in der lokalen Energiespeichereinheit der Energieversorgungsanlage gespeicherte Energie stellt eine Energiereserve für den jeweiligen Nutzer der Energieversorgungsanlage dar, die es ihm erlaubt, lokale Energieverbrauchseinheiten auch bei Ausfall bzw. starker Reduzierung lokal erzeugter Energie sowie bei Reduzierung oder Ausfall der aus dem Energieversorgungsnetz beziehbaren Energie noch für eine gewisse Zeit mit Energie zu versorgen und somit zu betreiben.

Bei herkömmlichen Energieversorgungsanlagen erfolgt jedoch keine intelligente Anpassung der vorgehaltenen Energiereserve. Vielmehr wird bei herkömmlichen Energieversorgungsanlagen als Energiereserve eine vorgegebene Energiemenge gespeichert. Dies hat zur Folge, dass die vorgehaltene Energiereserve bei bestimmten Situationen nicht ausreichend ist. Dies wiederum führt nach einer gewissen Zeit zu einer nicht ausreichenden Energieversorgung der lokalen Energieverbrauchseinheiten der Energieversorgungsanlage und somit zum Ausfall dieser lokalen Energieverbrauchseinheiten.

Es ist daher eine Aufgabe der vorliegenden Erfindung, eine Energieversorgungsanlage zu schaffen, die über eine optimierte Energiereserve verfügt.

Diese Aufgabe wird erfindungsgemäß durch eine Energieversorgungsanlage, eine Steuereinheit und Verfahren zum Bereitstellen einer Energiereserve bei einer Energieversorgungsanlage mit den Merkmalen der unabhängigen Patentansprüche gelöst.

Eine Energieversorgungsanlage, die geeignet ist, Energie aus einem Energieversorgungsnetz zu beziehen oder in das Energieversorgungsnetz einzuspeisen, weist auf:
mindestens eine lokale Energieerzeugungseinheit zur Erzeugung von Energie,
mindestens eine lokale Energieverbrauchseinheit zum Verbrauch von Energie,
mindestens einen lokalen Energiespeicher zur Speicherung von Energie und
eine Steuereinheit, welche einen Eigenenergieverbrauch der von der mindestens einen lokalen Energieerzeugungseinheit erzeugten Energiemenge durch die mindestens eine lokale Energieverbrauchseinheit der Energieversorgungsanlage sowie die in der mindestens einen Energiespeichereinheit gespeicherte Energiemenge steuert,
wobei die Steuereinheit nach Erkennen mindestens eines vorhersehbaren zukünftigen Ereignisses, das eine Energiemenge der durch die Energieverbrauchseinheiten erzeugbaren Energie und/oder eine Energiemenge der aus dem Energieversorgungsnetz beziehbaren Energie und/oder eine Energiemenge der durch die Energieverbrauchseinheiten verbrauchten Energie beeinflusst, eine in dem mindestens einen lokalen Energiespeicher gespeicherte Energiereserve in Abhängigkeit von den erkannten Ereignissen vor Eintreten dieser Ereignisse vorsorglich dynamisch anpasst.

Bei einer möglichen Ausführungsform der erfindungsgemäßen Energieversorgungsanlage weist die Steuereinheit eine Auswerteeinheit auf, welche Ereignismeldungen, die von Nachrichtenquellen empfangene Nachrichten und/oder von Sensoren empfangene Sensordaten umfassen, zur Vorhersage von zukünftigen für die lokale Energieversorgung relevanten Ereignissen auswertet.

Bei einer möglichen Ausführungsform stellt die Steuereinheit die Energiereserve in Abhängigkeit von einer in einem Konfigurationsdatenspeicher gespeicherten Konfiguration der Energieversorgungsanlage ein.

Bei einer möglichen bevorzugten Ausführungsform der erfindungsgemäßen Energieversorgungsanlage maximiert die Steuereinheit automatisch bei eingestellter Energiereserve den Eigenenergieverbrauch der durch die lokalen Energieerzeugungseinheiten der Energieversorgungsanlage erzeugten Energiemenge durch die lokalen Energieverbrauchseinheiten der Energieversorgungsanlage.

Bei einer weiteren möglichen Ausführungsform der erfindungsgemäßen Energieversorgungsanlage erzeugen die lokalen Energieerzeugungseinheiten der Energieversorgungsanlage Energie aus erneuerbaren Ressourcen, insbesondere aus Sonnenlicht oder Windkraft, und/oder aus nicht erneuerbaren Ressourcen, insbesondere aus Brennstoffen.

Bei einer weiteren möglichen Ausführungsform der erfindungsgemäßen Energieversorgungsanlage umfassen die lokalen Energiespeicher der Energieversorgungsanlage Batteriespeichereinheiten zur Speicherung elektrischer Energie, Speichereinheiten zur Speicherung potentieller und/oder kinetischer Energie, Brennstoffspeichereinheiten zur Speicherung chemischer Energie und/oder Thermospeichereinheiten zur Speicherung thermischer Energie.

Bei einer weiteren möglichen Ausführungsform der erfindungsgemäßen Energieversorgungsanlage werden die durch die Steuereinheit angepasste Energiereserve in einem lokalen Energiespeicher der Energieversorgungsanlage oder auf mehreren verschiedenen lokalen Energiespeichern der Energieversorgungsanlage verteilt gespeichert.

Bei einer weiteren möglichen Ausführungsform der erfindungsgemäßen Energieversorgungsanlage wird bei einem aus den vorhergesagten Ereignissen resultierenden erwarteten Abfall der lokal erzeugbaren Energie und/oder bei einem erwarteten Abfall der aus dem Energieversorgungsnetz beziehbaren Energie und/oder bei einem erwarteten Anstieg der lokal verbrauchten Energie die gespeicherte Energiereserve durch die Steuereinheit der Energieversorgungsanlage automatisch vorsorglich erhöht.

Bei einer weiteren möglichen Ausführungsform der erfindungsgemäßen Energieversorgungsanlage wird bei einem aus den vorhergesagten Ereignissen resultierenden erwarteten Anstieg der lokal erzeugbaren Energie und/oder bei einem erwarteten Anstieg der aus dem Energieversorgungsnetz beziehbaren Energie und/oder bei einem erwarteten Abfall der lokal verbrauchten Energie die gespeicherte Energiereserve durch die Steuereinheit der Energieversorgungsanlage automatisch vorsorglich vermindert.

Bei einer weiteren möglichen Ausführungsform der erfindungsgemäßen Energieversorgungsanlage verändert die Steuereinheit eine Anpassungsrate, mit welcher die in dem mindestens einem Energiespeicher gespeicherte Energiereserve angepasst wird, in Abhängigkeit des Eigenenergieverbrauchs und/oder von einem Vorlaufzeitraum zwischen dem Empfang einer Ereignismeldung, die mindestens ein zukünftiges Ereignis ankündigt, und dem tatsächlichen Ereigniseintritt des durch die Ereignismeldung angekündigten Ereignisses.

Bei einer weiteren möglichen Ausführungsform der erfindungsgemäßen Energieversorgungsanlage passt die Steuereinheit die Energiemenge der in dem mindestens einem Energiespeicher gespeicherten Energiereserve in Abhängigkeit von einer prognostizierten oder wahrscheinlichen Ereignisdauer des in der Ereignismeldung angekündigten Ereignisses an.

Bei einer weiteren möglichen Ausführungsform der erfindungsgemäßen Energieversorgungsanlage ist eine Aufbereitungseinheit vorgesehen, welche Ereignismeldungen, insbesondere Nachrichten, die von einer Vielzahl unterschiedlicher heterogener Nachrichtenquellen stammen, oder Sensordaten, die von einer Vielzahl unterschiedlicher heterogener Sensoren stammen, hinsichtlich ihrer Relevanz für die lokale Energieversorgung der Energieversorgungsanlage vorfiltert und/oder vorverarbeitet.

Bei einer möglichen Ausführungsform der erfindungsgemäßen Energieversorgungsanlage überträgt die Aufbereitungseinheit die gefilterten und/oder vorverarbeiteten Ereignismeldungen an die Steuereinheit zur dynamischen Anpassung der in dem mindestens einen lokalen Energiespeicher der Energieversorgungsanlage gespeicherten Energiereserve und/oder zur dynamischen Anpassung der Anpassungsrate, mit welcher die Energiereserve angepasst wird.

Bei einer weiteren möglichen Ausführungsform der erfindungsgemäßen Energieversorgungsanlage führt die Aufbereitungseinheit eine Gewichtung der Ereignismeldungen hinsichtlich ihrer Zuverlässigkeit durch.

Bei einer weiteren möglichen Ausführungsform der erfindungsgemäßen Energieversorgungsanlage umfassen die Ereignismeldungen Meldungen, die für den laufenden Netzbetrieb des Energieversorgungsnetzes relevant sind.

Diese Ereignismeldungen weisen insbesondere Infrastrukturmeldungen hinsichtlich der öffentlichen Infrastruktur und/oder Netzinfrastruktur auf, welche von einem Server eines Netzwerkbetreibers und/oder einer Baubehörde stammen.

Bei einer weiteren möglichen Ausführungsform der erfindungsgemäßen Energieversorgungsanlage weisen die Ereignismeldungen georeferenzierte Wettervorhersagemeldungen und/oder Wetterwarnmeldungen auf, die von einem Server eines Wettervorhersagedienstes und/oder eines Versicherungsunternehmens stammen.

Bei einer weiteren möglichen Ausführungsform der erfindungsgemäßen Energieversorgungsanlage weisen die Ereignismeldungen Meldungen hinsichtlich der Brennstoffversorgung mit Brennstoffen auf, die von einem Server eines Brennstofflieferanten und/oder eines Nachrichtendienstes stammen.

Bei einer weiteren möglichen Ausführungsform der erfindungsgemäßen Energieversorgungsanlage weisen die Ereignismeldungen Sensordaten und/oder Parameter auf, insbesondere Sensordaten und/oder Parameter der lokalen Energieerzeugungseinheiten, der lokalen Energieverbrauchseinheiten, der lokalen Energiespeichereinheiten und/oder des Energieversorgungsnetzes.

Eine Steuereinheit für eine Energieversorgungsanlage, insbesondere für eine Energieversorgungsanlage, ist vorgesehen, die geeignet ist, Energie aus einem Energieversorgungsnetz zu beziehen oder in das Energieversorgungsnetz einzuspeisen, wobei die Steuereinheit einen Eigenenergieverbrauch der von mindestens einer lokalen Energieerzeugungseinheit der Energieversorgungsanlage erzeugten Energie durch mindestens eine lokale Energieverbrauchseinheit der Energieversorgungsanlage sowie die in mindestens einem lokalen Energiespeicher der Energieversorgungsanlage gespeicherte Energiemenge steuert, wobei die Steuereinheit nach Erkennen mindestens eines vorhersehbaren zukünftigen Ereignisses, das die Energiemenge der durch die Energieerzeugungseinheiten erzeugbaren Energie und/oder die Energiemenge der aus dem Energieversorgungsnetz beziehbaren Energie und/oder die Energiemenge der durch die Energieverbrauchseinheiten verbrauchten Energie beeinflusst, eine in dem mindestens einen lokalen Energiespeicher gespeicherte Energiereserve in Abhängigkeit von den erkannten Ereignissen vor Eintreten dieser Ereignisse vorsorglich dynamisch anpasst.

Bei einer möglichen Ausführungsform der erfindungsgemäßen Steuereinheit besitzt diese eine Nutzerschnittstelle, über die die in der mindestens einen lokalen Energiespeichereinheit der Energieversorgungsanlage gespeicherte Energiereserve durch einen Nutzer manuell einstellbar ist.

Bei einer weiteren möglichen Ausführungsform der erfindungsgemäßen Steuereinheit ist die Steuereinheit eine in der Energieversorgungsanlage vorgesehene lokale Steuereinheit.

Bei einer weiteren möglichen Ausführungsform der erfindungsgemäßen Steuereinheit ist die Steuereinheit eine entfernte Steuereinheit, die über eine Kommunikationsschnittstelle mit der Energieversorgungsanlage kommuniziert.

Bei einer weiteren möglichen Ausführungsform der erfindungsgemäßen Steuereinheit ist die Steuereinheit in einem tragbaren Gerät integriert und führt eine Applikation zur dynamischen Anpassung der gespeicherten Energiereserve der Energieversorgungsanlagen aus.

Bei einer möglichen Ausführungsform ist die Steuereinheit in einem Mobilfunkgerät integriert.

Ein Verfahren zum Bereitstellen einer Energiereserve bei einer Energieversorgungsanlage umfasst die Schritte:
Erkennen von mindestens einem zukünftigen Ereignis, das die Energiemenge der durch eine Energieerzeugungseinheit der Energieversorgungsanlage erzeugbaren Energie und/oder die Energiemenge der aus einem Energieversorgungsnetz durch die Energieversorgungsanlage beziehbaren Energie und/oder die Energiemenge von durch Energieverbrauchseinheiten der Energieversorgungsanlage verbrauchten Energie beeinflusst; und
Anpassen der in mindestens einem lokalen Energiespeicher der Energieversorgungsanlage gespeicherten Energiereserve in Abhängigkeit von den erkannten zukünftigen Ereignissen vor deren Eintreten.

Bei einer möglichen Ausführungsform des erfindungsgemäßen Verfahrens wird die lokal gespeicherte Energiereserve zusätzlich in Abhängigkeit von einer momentanen Konfiguration der Energieversorgungsanlage eingestellt.

Bei einer möglichen Ausführungsform des erfindungsgemäßen Verfahrens wird bei eingestellter Energiereserve ein Eigenenergieverbrauch der durch lokale Energieerzeugungseinheiten der Energieversorgungsanlage erzeugten Energiemenge durch lokale Energieverbrauchseinheiten der Energieversorgungsanlage maximiert.

Bei einer möglichen Ausführungsform des erfindungsgemäßen Verfahrens wird das Energieversorgungsnetz hinsichtlich seiner Frequenz und/oder hinsichtlich Oberwellen überwacht und, falls ein möglicher Netzausfall erkannt wird, wird die Energiereserve angepasst.

Die Erfindung schafft ferner gemäß einem weiteren Aspekt ein Anwendungsprogramm mit Programmanweisungen zur Durchführung des erfindungsgemäßen Verfahrens zum Bereitstellen einer Energiereserve bei einer Energieversorgungsanlage.

Die Erfindung schafft ferner gemäß einem weiteren Aspekt einen Datenträger, der ein derartiges Anwendungsprogramm speichert.

Die Erfindung schafft ferner ein Energieversorgungsnetz mit einer Vielzahl daran angeschlossener Energieversorgungsanlagen gemäß dem ersten Aspekt der Erfindung.

Im Weiteren werden mögliche Ausführungsformen des erfindungsgemäßen Verfahrens zum Bereitstellen einer Energiereserve für eine Energieversorgungsanlage, der erfindungsgemäßen Steuereinheit für eine Energieversorgungsanlage sowie des erfindungsgemäßen Energieversorgungsnetzwerkes mit einer Vielzahl daran angeschlossener Energieversorgungsanlagen unter Bezugnahme auf die beigefügten Figuren näher erläutert.

Es zeigen:
- Fig. 1: ein Schaltungsdiagramm zur Darstellung eines exemplarischen Ausführungsbeispiels einer erfindungsgemäßen Energieversorgungsanlage gemäß einem ersten Aspekt der Erfindung;
- Fig. 2A, 2B, 2C: Schaltungsdiagramme zur Darstellung verschiedener Ausführungsvarianten einer bei der erfindungsgemäßen Energieversorgungsanlage eingesetzten Steuereinheit;
- Fig. 3A: ein einfaches Ablaufdiagramm zur Darstellung einer ersten Ausführungsvariante des erfindungsgemäßen Verfahrens zum Bereitstellen einer Energiereserve;
- Fig. 3B: ein weiteres einfaches Ablaufdiagramm zur Darstellung einer weiteren möglichen Ausführungsvariante des erfindungsgemäßen Verfahrens zum Bereitstellen einer Energiereserve;
- Fig. 4: ein weiteres Ablaufdiagramm zur Darstellung eines Ausführungsbeispiels des erfindungsgemäßen Verfahrens zum Bereitstellen einer Energiereserve bei einer Energieversorgungsanlage;
- Fig. 5: ein Diagramm zur Darstellung eines weiteren Ausführungsbeispiels einer erfindungsgemäßen Energieversorgungsanlage;
- Fig. 6: ein Diagramm zur Darstellung eines weiteren Ausführungsbeispiels einer erfindungsgemäßen Energieversorgungsanlage;
- Fig. 7A, 7B: Signaldiagramme zur Erläuterung der Funktionsweise der beiden in Fig. 5, 6 dargestellten Ausführungsbeispiele der erfindungsgemäßen Energieversorgungsanlage;
- Fig. 8A, 8B: Diagramme zur Erläuterung der Funktionsweise einer möglichen Ausführungsform einer bei der erfindungsgemäßen Energieversorgungsanlage eingesetzten Steuereinheit;
- Fig. 9A, 9B: Signaldiagramme zur Darstellung eines weiteren möglichen Ausführungsbeispiels der erfindungsgemäßen Energieversorgungsanlage;
- Fig. 10: ein weiteres Signaldiagramm zur Erläuterung einer möglichen Ausführungsform der erfindungsgemäßen Energieversorgungsanlage.

In den Figuren bezeichnen korrespondierende Bezugszeichen korrespondierende bzw. ähnliche Einheiten.

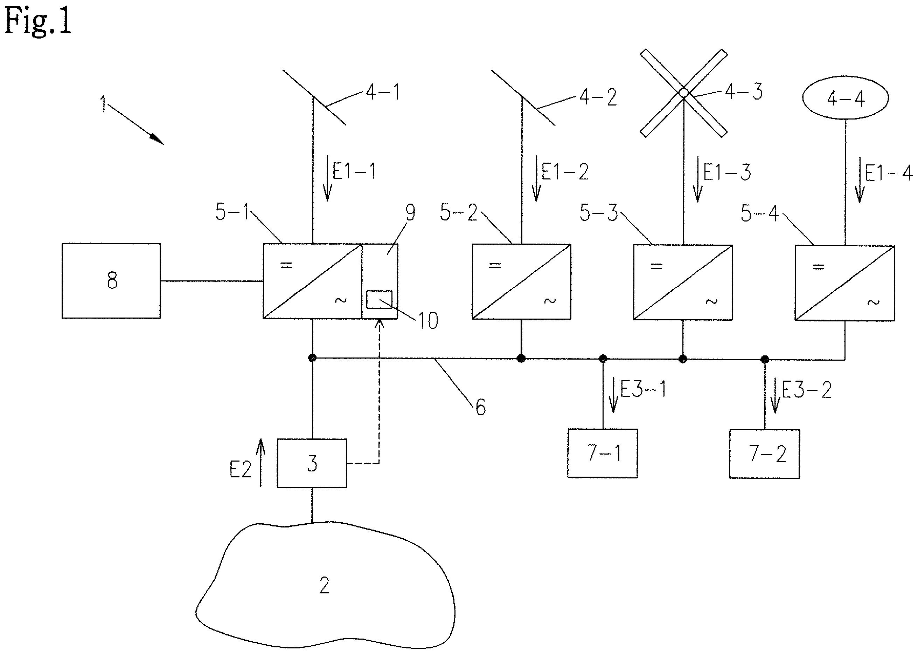

Fig. 1 zeigt ein exemplarisches Ausführungsbeispiel einer Energieversorgungsanlage EVA 1. Die Energieversorgungsanlage 1 ist geeignet, Energie aus einem Energieversorgungsnetz 2 zu beziehen oder in dieses Energieversorgungsnetz 2 einzuspeisen. Bei einer möglichen Ausführungsform ist das Energieversorgungsnetz 2 ein Niederspannungs- oder Mittelspannungsnetz. An dem Energieversorgungsnetz 2 können mehrere Energieversorgungsanlagen 1 angeschlossen sein. In dem dargestellten Ausführungsbeispiel verfügt die Energieversorgungsanlage 1 über eine Messeinheit 3, mit dessen Hilfe die in das Energieversorgungsnetz 2 eingespeiste Energie und die aus dem Energieversorgungsnetz 2 bezogene Energie gemessen werden kann. Die Energieversorgungsanlage 1 verfügt über mindestens eine lokale Energieerzeugungseinheit 4 zur Erzeugung von Energie. In dem in Fig. 1 dargestellten Ausführungsbeispiel hat die Energieversorgungsanlage 1 vier lokale Energieerzeugungseinheiten 4-1, 4-2, 4-3, 4-4, die lokal Energie erzeugen. Bei dem dargestellten Beispiel sind zwei Photovoltaikanlagen 4-1, 4-2 vorgesehen, die elektrische Energie aus Sonnenlicht generieren, sowie eine Windkraftanlage 4-3, die elektrische Energie aus Windenergie generiert. Die lokalen Energieerzeugungseinheiten 4-1, 4-2, 4-3 erzeugen Energie aus erneuerbaren Ressourcen, nämlich aus Sonnenlicht oder Windkraft. Daneben kann bei einer möglichen Ausführungsform die Energieversorgungsanlage 1 auch mindestens eine lokale Energieerzeugungseinheit 4-4 aufweisen, die Energie aus nicht erneuerbaren Ressourcen, insbesondere aus Brennstoffen, erzeugt. Diese Brennstoffe können beispielsweise fossile Brennstoffe umfassen oder Wasserstoff. Die Energieerzeugungseinheiten sind über Wechselrichter bzw. Umrichter 5-1, 5-2, 5-3, 5-4 mit einem lokalen Energieverteilnetz 6 verbunden, an dem ein oder mehrere lokale Energieverbrauchseinheiten 7-1, 7-2 angeschlossen sind. Bei dem in Fig. 1 dargestellten Ausführungsbeispiel ist die Photovoltaikanlage 4-1 über einen Wechselrichter 5-1 an das lokale Netz 6 der Energieversorgungsanlage 1 angeschlossen. Die Energieverbrauchseinheiten 7-i können unterschiedliche Geräte umfassen, beispielsweise Haushaltsgeräte, Maschinen bzw. Elektromotoren oder Wärmequellen wie beispielsweise eine Wärmepumpe. Die Photovoltaikanlage 4-1 erzeugt einen elektrischen Gleichstrom, der durch den Wechselrichter 5-1 in einen Wechselstrom umgewandelt wird, der entweder über die Messeinheit 3 in das Energieversorgungsnetz 2 eingespeist wird oder durch eine Energieverbrauchseinheit 7-i lokal verbraucht werden kann. An den Wechselrichter 5-1 der ersten Photovoltaikanlage 4-1 ist in dem dargestellten Ausführungsbeispiel mindestens eine lokale Energiespeichereinheit 8 angeschlossen. Die lokale Energiespeichereinheit 8 ist in der Lage, Energie zu speichern bzw. zwischenzuspeichern. Bei einer möglichen Ausführungsform ist die lokale Energiespeichereinheit 8 der Energieversorgungsanlage 1 eine Batteriespeichereinheit zur Speicherung elektrischer Energie. Bei einer weiteren möglichen Ausführungsform kann die lokale Energiespeichereinheit 8 auch eine Speichereinheit zur Speicherung potentieller oder kinetischer Energie sein. Bei einer weiteren möglichen Ausführungsform umfasst die Energiespeichereinheit 8 auch Brennstoffspeichereinheiten zur Speicherung chemischer Energie. Bei einer weiteren möglichen Ausführungsform kann die Energiespeichereinheit 8 auch eine Thermospeichereinheit zur Speicherung thermischer Energie aufweisen.

Die Photovoltaikanlagen 4-1, 4-2 können eine Vielzahl von Solarzellen aufweisen, die Sonnenlicht in elektrische Energie umwandeln, wobei der dabei erzeugte Gleichstrom DC durch die Wechselrichter 5-1, 5-2 in Wechselstrom AC umgewandelt wird. Darüber hinaus verfügt die Energieversorgungsanlage 1 bei dem in Fig. 1 dargestellten Ausführungsbeispiel über eine Windkraftanlage 4-3, wobei ein Rotor über ein Getriebe einen Stromgenerator antreiben kann. Die Windkraftanlage 4-3 ist über ein Kopplungselement 5-3 mit dem lokalen Netzwerk 6 verbunden. Diese Kopplungseinrichtung kann bei einer möglichen Ausführungsform einen Gleichstromzwischenkreis enthalten.

Neben den regenerativen Energiequellen 4-1, 4-2, 4-3 kann die Energieversorgungsanlage 1 auch über eine oder mehrere Energieerzeugungseinheiten verfügen, die durch Verbrennung von Brennstoffen elektrische Energie erzeugen. Bei dem in Fig. 1 dargestellten Ausführungsbeispiel verfügt die Energieversorgungsanlage 1 über einen Generator 4-4, welcher elektrische Energie durch Verbrennung von Brennstoffen, beispielsweise fossilen Brennstoffen oder Wasserstoff, generiert und über die Kopplungseinheit 5-4 in das lokale Stromnetz 6 der Energieversorgungsanlage 1 einspeist.

Die Anzahl und Art der verschiedenen Energieerzeugungseinheiten 4-i kann variieren und ist durch den jeweiligen Betreiber bzw. Nutzer der Energieversorgungsanlage 1 entsprechend seinen Bedürfnissen und der Lage der Energieversorgungsanlage 1 anpassbar bzw. konfigurierbar. Indem der Nutzer der Energieversorgungsanlage 1 verschiedene Arten von Energieerzeugungseinheiten 4-i für seine Energieversorgungsanlage 1 vorsieht, vermindert er seine Abhängigkeit von einer bestimmten Art der Energieerzeugung. Bei dem in Fig. 1 dargestellten Ausführungsbeispiel ist ein Energiespeicher 8 an den Wechselrichter 5-1 angeschlossen, sodass eine Speichereinheit gebildet ist. Optional kann an diesem Wechselrichter 5-1 auch eine erste Photovoltaikanlage 4-1 angeschlossen sein. Bei alternativen Ausführungsformen können mehrere Energiespeicher 8 vorgesehen sein, welche an der Speichereinheit angeschlossen sind. Auch die Anzahl und die Art der verwendeten Energiespeicher 8 der Energieversorgungsanlage 1 sind konfigurierbar. Bei dem in Fig. 1 dargestellten Ausführungsbeispiel ist eine Messeinheit 3 vorgesehen, die den Energiefluss aus dem Energieversorgungsnetz 2 heraus und in das Energieversorgungsnetz 2 hinein messen kann und einer Steuereinheit 9 meldet. Bei einer weiteren möglichen Ausführungsform können auch für die verschiedenen Energieverbrauchseinheiten 7-1, 7-2 lokale Messeinheiten vorgesehen sein, die durch die jeweilige Energieverbrauchseinheit 7-1, 7-2 verbrauchte Energie messen und der Steuereinheit 9 melden. Darüber hinaus können die Energieverbrauchseinheiten 7-1, 7-2 bei einer möglichen Ausführungsform über Schalteinheiten an das lokale Netz 6 angeschlossen sein, wobei die Schalteinheiten vorzugsweise durch die Steuereinheit 9 ansteuerbar bzw. schaltbar sind. Weiterhin kann bei einer möglichen Ausführungsform für jede Energieerzeugungseinheit 4-i jeweils eine Messeinheit vorgesehen sein, die die durch die jeweilige Energieerzeugungseinheit 4-1 erzeugte Energiemenge misst und an die Steuereinheit 9 der Energieversorgungsanlage 1 meldet. Bei dem in Fig. 1 dargestellten Ausführungsbeispiel der Energieversorgungsanlage 1 ist die Steuereinheit 9 in dem ersten Wechselrichter 5-1 integriert. Selbstverständlich kann die Steuervorrichtung 9 auch über eine Datenverbindung mit dem Wechselrichter verbunden sein. Die Steuereinheit 9 steuert einen Eigenenergieverbrauch EEV der von der mindestens einen lokalen Energieerzeugungseinheit 4-i erzeugten Energiemenge durch mindestens eine lokale Energieverbrauchseinheit 7-i der Energieversorgungsanlage 1. Darüber hinaus steuert bzw. regelt die Steuereinheit 9 die in dem mindestens einen Energiespeicher 8 gespeicherte Energiemenge.

Die Steuereinheit 9 ist derart ausgelegt, dass sie nach Erkennen mindestens eines vorhersehbaren zukünftigen Ereignisses bzw. Events EV, das die Energiemenge E1 der durch die Energieerzeugungseinheiten 4-1 erzeugbaren Energie und/oder eine Energiemenge E 2 der aus dem Energieversorgungsnetzwerk 2 erzeugbaren Energie und/oder eine Energiemenge E3 der durch die Energieverbrauchseinheiten 7-i verbrauchten Energie beeinflusst, die in dem mindestens einen lokalen Energiespeicher 8 gespeicherte Energiereserve ER in Abhängigkeit von den erkannten Ereignissen und vor Eintreten dieser Ereignisse vorsorglich dynamisch anpasst.

Hierzu weist die Steuereinheit 9 vorzugsweise eine Auswerteeinheit bzw. Datenauswerteeinheit 10 auf, welche Ereignismeldungen EM auswertet. Diese Ereignismeldungen umfassen von Nachrichtenquellen empfangene Nachrichten und/oder von Sensoren empfangene Sensordaten. Die Auswerteeinheit 10 wertet die erhaltenen Ereignismeldungen zur Vorhersage von zukünftigen für die lokale Energieversorgung relevanten Ereignissen EV aus. Die Ereignismeldungen EM umfassen insbesondere Nachrichten, die von einer Vielzahl unterschiedlicher heterogener Nachrichtenquellen stammen können. Außerdem können die Ereignismeldungen Nachrichten von Sensoren bzw. Sensordaten umfassen, die von einer Vielzahl unterschiedlicher heterogener Sensoren stammen. Die von der Auswerteeinheit 10 erhaltenen Ereignismeldungen EM umfassen bei einer möglichen Ausführungsform Meldungen, die für den laufenden Netzbetrieb des Energieversorgungsnetzes 2 relevant sind. Diese Ereignismeldungen EM sind beispielsweise Infrastrukturmeldungen hinsichtlich der öffentlichen Infrastruktur und/oder Netzinfrastruktur. Diese Ereignismeldungen stammen bei einer möglichen Ausführungsform von einem Server eines Netzbetreibers oder einer Baubehörde. Beispielsweise kann eine Baubehörde als Ereignismeldung EM eine Nachricht an Nutzer in der Nähe einer Baustelle übertragen, wenn die Baustelle zu einem zeitweisen Abschalten des lokalen Energieversorgungsnetzes 2, beispielsweise des lokalen Niederspannungsnetzes, für einen bestimmten Zeitraum führen wird. Wird beispielsweise in einer Straße eines Ortes aufgrund einer Baustelle bzw. einer Baumaßnahme das lokale Energieversorgungsnetz 2 in diesem Bereich zeitweise abgeschaltet, können durch die Baubehörde und/oder den Netzwerkbetreiber diejenigen Nutzer benachrichtigt werden, die eine Energieversorgungsanlage 1 in diesem Bereich betreiben. Diese Infrastrukturereignismeldungen können dem Nutzer bzw. der Steuereinheit 9 der Energieversorgungsanlage 1 über unterschiedliche Nachrichtenkanäle beispielsweise per SMS oder E-Mail oder in sonstiger Weise übermittelt werden.

Bei einer weiteren möglichen Ausführungsform der erfindungsgemäßen Energieversorgungsanlage 1 enthält die Auswerteeinheit 10 der Steuereinheit 9 außer Infrastruktur-Ereignismeldungen auch georeferenzierte Wettervorhersagemeldungen und/oder Wetterwarnmeldungen. Diese Ereignismeldungen können bei einer möglichen Ausführungsform von einem Server eines Wettervorhersagedienstes stammen. Bei einer weiteren möglichen Ausführungsform können diese Wettervorhersagemeldungen oder Wetterwarnmeldungen auch von einem Server eines Versicherungsunternehmens stammen, bei dem der Nutzer bzw. Betreiber der Energieversorgungsanlage 1 versichert ist.

Bei einer weiteren möglichen Ausführungsform erhält die Auswerteinheit 10 der Steuereinheit 9 zudem Ereignismeldungen hinsichtlich der zukünftigen Brennstoffversorgung mit Brennstoffen. Beispielsweise kann der Betreiber der Energieversorgungsanlage 1 über einen zukünftigen Engpass bei der Brennstoffversorgung mit einem bestimmten Brennstoff informiert werden. Beispielsweise kann der Betreiber der Energieversorgungsanlage 1 bzw. die Auswerteeinheit 10 darüber informiert werden, dass ein bestimmter Brennstoff, beispielsweise Brenngas, aufgrund der Unterbrechung einer Versorgungsleitung für eine bestimmte Zeit nicht zur Verfügung steht. Die Unterbrechung der Brennstoffversorgung kann beispielsweise dazu führen, dass der in Fig. 1 dargestellte Generator 4-4 in Zukunft für eine bestimmte Zeitdauer nicht betrieben werden kann und demzufolge auch keine Energie für das lokale Netz 6 generieren kann. Die Ereignismeldungen, welche die zukünftige Brennstoffversorgung mit demselben oder unterschiedlichen Brennstoffen betreffen, können bei einer möglichen Ausführungsform von einem Server eines Brennstofflieferanten und/oder von einem Server eines Nachrichtendienstes stammen.

Die Ereignismeldungen EM können von einer Vielzahl unterschiedlicher heterogener Nachrichtenquellen stammen. Bei einer möglichen Ausführungsform weist die Steuereinheit 9 eine Nutzerschnittstelle auf, über die der mindestens eine lokale Energiespeicher 8 der Energieversorgungsanlage 1 gespeicherte Energiereserve ER durch einen Nutzer bzw. einen Betreiber der Energieversorgungsanlage 1 manuell einstellbar ist. Bei dem in Fig. 1 dargestellten Ausführungsbeispiel ist die Steuereinheit 9 in den Wechselrichter 5-1 der ersten Photovoltaikanlage 4-1 integriert, also lokal in der EVA 1. Bei einer alternativen Ausführungsform kann die Steuereinheit 9 auch eine entfernte Steuereinheit 9 sein, die über eine Kommunikationsschnittstelle mit der Energieversorgungsanlage 1 kommuniziert. Dabei kann die Steuereinheit 9 beispielsweise in einem tragbaren Gerät, insbesondere in einem Mobilfunkgerät, integriert sein und eine Applikation zur dynamischen Anpassung der gespeicherten Energiereserve ER der Energieversorgungsanlage 1 ausführen.

Bei einer bevorzugten Ausführungsform der erfindungsgemäßen Energieversorgungsanlage 1 maximiert die Steuereinheit 9 bei eingestellter Energiereserve ER den Eigenenergieverbrauch EEV der durch die lokalen Energieerzeugungseinheiten 4-i insgesamt erzeugten Energiemenge durch die verschiedenen lokalen Energieverbrauchseinheiten 7-i der Energieversorgungsanlage 1. Die Anzahl der Energieverbrauchseinheiten 7-i innerhalb der Energieversorgungsanlage 1 eines Nutzers kann variieren. Die Energieversorgungsanlage 1 ist bei einer möglichen Ausführungsform eine Energieversorgungsanlage eines Eigenheims und weist als Energieverbrauchseinheiten 7-i Haushaltsgeräte, beispielsweise eine Waschmaschine oder einen elektrischen Boiler und sonstige Geräte auf, beispielsweise Maschinen, Wärmepumpen oder dergleichen. Weiterhin kann es sich bei der Energieversorgungsanlage 1 auch um eine Energieversorgungsanlage eines Unternehmens handeln, das mit Hilfe der lokal erzeugten Energie Arbeitsmaschinen des Unternehmens betreibt. Weitere typische Beispiele für Energieverbrauchseinheiten 7-i sind Klimaanlagen, elektrische Heizgeräte, Spülmaschinen, Elektroherde und dergleichen. Die Steuerung 9 steuert mit Hilfe von Schalteinheiten die Energieverbrauchseinheiten 7-i der Energieversorgungsanlage 1 derart an, dass der Anteil der durch die Energieerzeugungseinheiten 4-i der Energieversorgungsanlage 1 selbst erzeugten Energie an derjenigen Energie, welche durch die Energieverbrauchseinheiten 7-i der Energieversorgungsanlage 1 verbraucht wird, maximal ist. Bei einer möglichen Ausführungsform wird derjenige Anteil, der durch die Energieerzeugungseinheiten 4-i selbst erzeugten Energie, der nicht durch die Energieverbrauchseinheiten 7-i der Energieversorgungsanlage 1 selbst verbraucht wird, durch die Steuerung 9 entweder in das Energieversorgungsnetz 2 eingespeist oder bevorzugt in dem lokalen Energiespeicher 8 der Energieversorgungsanlage 1 gespeichert. Die Steuereinheit 9 maximiert somit nach optimaler Einstellung der Energiereserve ER vorzugsweise den Eigenenergieverbrauch EEV. Dies hat den Vorteil, dass die lokal erzeugte Energie größtenteils auch lokal verbraucht wird und die EVA 1 großteils vom Energieversorgungsnetz 2 unabhängig ist. Die Steuereinheit 9 sorgt nicht nur für eine kontinuierliche Maximierung des Eigenenergieverbrauchs EEV, sondern erfindungsgemäß auch für eine optimale dynamische Anpassung der Energiereserve ER innerhalb des mindestens einen Energiespeichers 8, so dass nach Erkennen mindestens eines vorhersehbaren zukünftigen Ereignisses EV eine Energiereserve ER vor Eintreten dieser Ereignisse vorsorglich derart dynamisch angepasst wird, dass die Energieversorgungsanlage 1 die Eigenenergieversorgung selbst bei Eintreten einer ungünstigen Gesamtsituation über einen möglichst langen Zeitraum sicher gewährleisten kann.

Bei einem vorhersehbaren kritischen Naturereignis, beispielsweise einem in einer Stunde vermutlich einsetzenden Sturm mit Hagel, wird durch die Steuereinheit 9 die Energiereserve ER vorsorglich erhöht, da der erwartete Hagelschlag einerseits zu einer Verminderung der durch die erneuerbaren Energiequellen 4-i erzeugten Energie und andererseits zu einer möglichen Unterbrechung von frei hängenden Verbindungsleitungen zu dem Energieversorgungsnetz 2 führen kann.

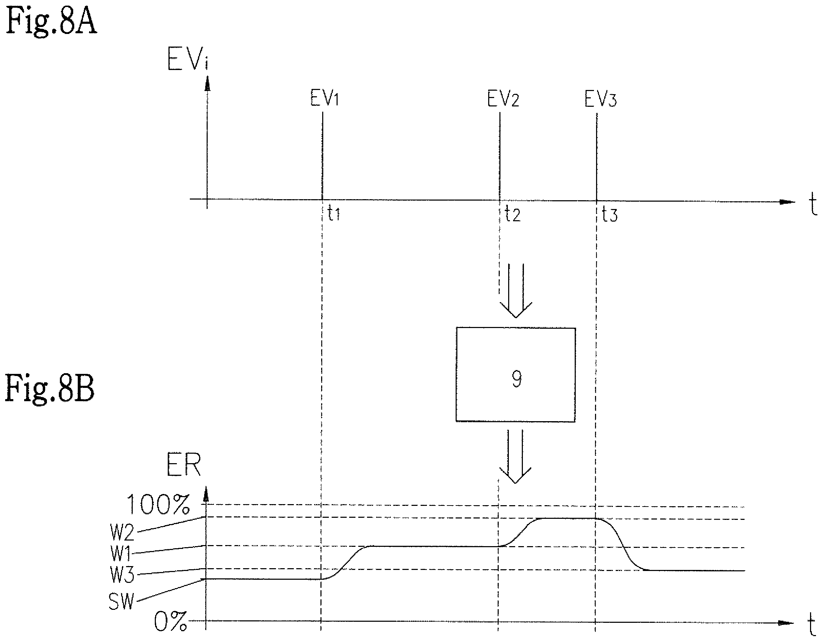

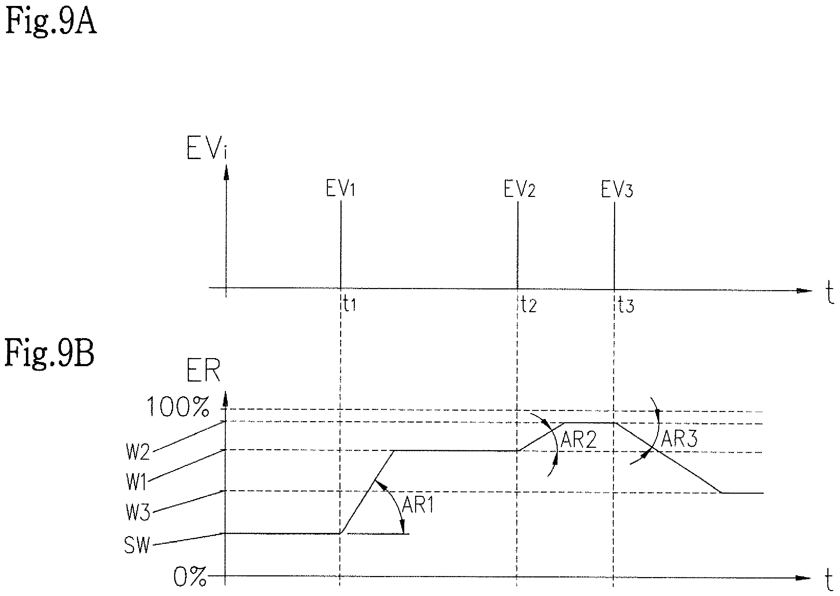

Bei einem aus den vorhergesagten Ereignissen resultierenden erwarteten Abfall der lokal erzeugbaren Energie E1 oder bei einem erwarteten Abfall der aus dem Energieversorgungsnetz beziehbaren Energie E2 und/oder bei einem erwarteten Anstieg der lokal verbrauchten Energie E3 wird durch die Steuereinheit 9 der Energieversorgungsanlage 1 die in dem lokalen Energiespeicher 8 gespeicherte Energiereserve ER vorsorglich automatisch erhöht. Umgekehrt wird bei einem aus den vorhergesagten Ereignissen resultierenden erwarteten Anstieg der lokal erzeugbaren Energie E1 und/oder bei einem erwarteten Anstieg der aus dem Energieversorgungsnetz beziehbaren Energie E2 und/oder bei einem erwarteten Abfall der lokal verbrauchten Energie E3 durch die Steuereinheit 9 der Energieversorgungsanlage 1 die in dem lokalen Energiespeicher 8 gespeicherte Energiereserve ER automatisch vorsorglich vermindert, wie auch aus Fig. 8 und 9 ersichtlich.

Bei einer weiteren möglichen Ausführungsform wird zudem durch die Steuereinheit 9 eine Anpassungsrate AR verändert, mit welcher die in dem mindestens einen Energiespeicher 8 gespeicherte Energiereserve ER angepasst wird. Dies erfolgt vorzugsweise in Abhängigkeit von einem Vorlaufzeitraum zwischen dem Empfang einer Ereignismeldung EM, die mindestens ein zukünftiges Ereignis EV ankündigt, und dem tatsächlichen Ereigniseintritt des durch die Ereignismeldung angekündigten Ereignisses. Wird beispielsweise ein Sturm mit Hagelschlag gemeldet, der unmittelbar bevorsteht, wird die Anpassungsrate AR, mit welcher die gespeicherte Energiereserve ER angepasst wird, erhöht, d.h. beispielsweise wird die Ladegeschwindigkeit, mit der ein Batteriespeicher 8 aufgeladen wird, erhöht. Wird beispielsweise gemeldet, dass der Sturm mit Hagelschlag erst in einigen Stunden aufziehen wird, besteht die Möglichkeit, die Energiereserve ER langsamer bzw. mit einer geringeren Anpassungsrate AR aufzubauen. Die Anpassungsrate AR wird entsprechend von der Steuervorrichtung 9 in Abhängigkeit vom EEV gewählt. Optimal wäre daher, die Energiereserve ER mit der lokal erzeugten Energie E1 zur Verfügung zu stellen. Sollte dies in Abhängigkeit vom Ereignis nicht möglich sein, wird Energie vom Netz herangezogen.

Bei einer weiteren möglichen Ausführungsform passt die Steuereinheit 9 die Energiemenge der in dem mindestens einen Energiespeicher 8 gespeicherten Energiereserve ER in Abhängigkeit von einer prognostizierten oder wahrscheinlichen Ereignisdauer des in der Ereignismeldung angekündigten Ereignisses an. Wird beispielsweise in einer Infrastrukturmeldung gemeldet, dass das betreffende Energieversorgungsnetz 2 für einen längeren Zeitraum von mehreren Tagen abgeschaltet werden muss, wird die vorgehaltene Energiereserve ER entsprechend höher eingestellt. Wird umgekehrt das Energieversorgungsnetz 2 aufgrund einer Baumaßnahme lediglich für wenige Stunden ausgeschaltet, kann die vorgehaltene Energiereserve ER entsprechend geringer eingestellt werden.

Bei der erfindungsgemäßen Energieversorgungsanlage 1 kann die Energiemenge/ER, die für einen Notstromfall vorgehalten wird, dynamisch angepasst werden. Die Menge der vorgehaltenen Energiereserve ER kann beispielsweise durch Parameter wie Ausfallwahrscheinlichkeit sowie Ausfalldauer beeinflusst werden. Die Steuerung 9 sorgt kontinuierlich für eine Maximierung des Eigenenergieverbrauchs EEV sowie für eine Optimierung der Energiereserve bzw. Notstromrücklage ER. Das heißt, dass die lokal erzeugte Energie im Optimalfall zu 100% lokal verbraucht und/oder lokal gespeichert wird.

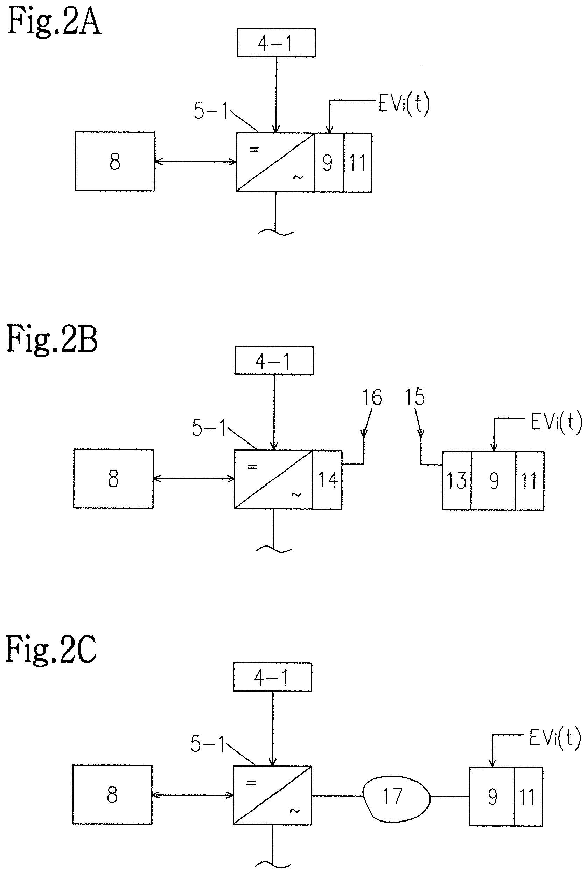

Fig. 2A, 2B, 2C zeigen verschiedene Ausführungsvarianten der erfindungsgemäßen Energieversorgungsanlage 1 in Bezug auf die Anordnung der Steuereinheit 9. Bei der in Fig. 2A dargestellten Ausführungsvariante ist die Steuereinheit 9 in einem Wechselrichter 5-1 einer lokalen Energieerzeugungseinheit 4-1 integriert und verfügt vorzugsweise über eine Nutzerschnittstelle 11. Über die Nutzerschnittstelle 11 hat der Nutzer bzw. der Betreiber der Energieversorgungsanlage 1 die Möglichkeit, die vorgehaltene Energiereserve ER manuell einzustellen. Die Steuereinheit 9 bzw. die darin integrierte Auswerteeinheit 10 empfängt einen fortlaufenden Strom von Ereignissen bzw. Events EV, die kontinuierlich ausgewertet werden, um die Energiereserve ER vorsorglich automatisch und dynamisch anzupassen. Die aktuell vorgehaltene Energiereserve ER kann bei einer möglichen Ausführungsform über eine Anzeige der Nutzerschnittstelle 11 dem jeweiligen Nutzer angezeigt werden. Weiterhin kann dem Nutzer über die Nutzerschnittstelle 11 der fortlaufende Strom von Ereignismeldungen EM bzw. Events EV angezeigt werden, die die dynamische vorsorgliche Anpassung der Energiereserve ER hervorrufen. Darüber hinaus besteht für den Nutzer über die Nutzerschnittstelle 11 bei einer möglichen Ausführungsform die Möglichkeit, seinerseits Ereignismeldungen EM manuell einzugeben, welche durch die Auswerteeinheit 10 der Steuereinheit 9 bei der Anpassung der Energiereserve ER berücksichtigt werden.

Fig. 2B zeigt als weiteres Ausführungsbeispiel eine Steuereinheit 9, die in einem tragbaren Gerät 12 integriert ist und über einen darin ebenfalls enthaltenen Transceiver 13 mit einem entfernten Transceiver 14 über Antennen 15, 16 drahtlos kommuniziert. Der Transceiver 14 ist bei dem dargestellten Ausführungsbeispiel in dem Wechselrichter 5-1 integriert. Die Energiereserve ER in dem Energiespeicher 8 wird in Abhängigkeit von Steuersignalen, die der Transceiver 14 von der entfernten Steuereinheit 9 drahtlos empfängt, automatisch und/oder manuell dynamisch angepasst. Bei dem in Fig. 2B dargestellten tragbaren Gerät 12 kann es sich beispielsweise um ein Mobilfunkgerät bzw. ein Handy eines Nutzers der Energieversorgungsanlage 1 handeln. Die in der Steuereinheit 9 enthaltene Auswerteeinheit 10 wertet dabei einen Strom von Events bzw. Ereignismeldungen aus und erzeugt entsprechende Steuersignale zur Einstellung der Energiereserve ER, wobei die Steuersignale zur Einstellung der Energiereserve über eine Funkschnittstelle von dem Mobilfunkgerät 12 zu dem Transceiver 14 des Wechselrichters 5-1 übertragen werden.

Fig. 2C zeigt ein weiteres Ausführungsbeispiel, bei der eine Steuereinheit 9 über ein Datennetzwerk 17 mit dem Wechselrichter 5-1 verbunden ist. Bei dem Datennetzwerk 17 kann es sich um ein lokales Datennetzwerk, WAN/Internet, ... der Energieversorgungsanlage 1 oder einen Datenbus handeln. Die in den Fig. 2A, 2B, 2C dargestellten Ausführungsvarianten können auch kombiniert werden.

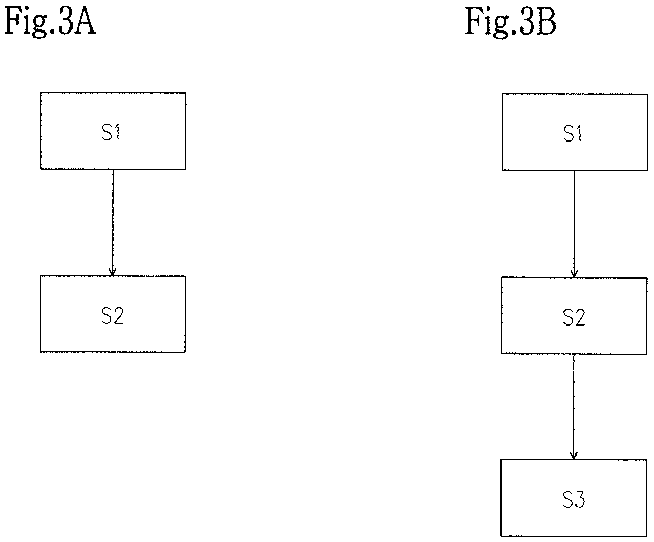

Fig. 3A zeigt ein einfaches Ablaufdiagramm zur Darstellung eines Ausführungsbeispiels des erfindungsgemäßen Verfahrens zum Bereitstellen einer Energiereserve ER bei einer Energieversorgungsanlage 1.

In einem ersten Schritt S1 wird mindestens ein zukünftiges Ereignis bzw. Event EV erkannt. Dieses Event bzw. Ereignis beeinflusst dabei die Energiemenge E1 der durch die Energieerzeugungseinheiten 4-i der Energieversorgungsanlage erzeugbaren Energie und/oder die Energiemenge E2 der aus einem Energieversorgungsnetz 2 durch die Energieversorgungsanlage 1 beziehbaren Energie und/oder die Energiemenge E3 von durch Energieverbrauchseinheiten 7-i der Energieversorgungsanlage 1 verbrauchten Energie. Die Ereignisse EV können sowohl die erzeugbare Energie E1, die beziehbare Energie E2 als auch die verbrauchte Energie E3 beeinflussen. Beispielsweise kann eine Sturmwarnung als Ereignis einen Sturm ankündigen, welcher voraussichtlich zur gravierenden Reduzierung der erzeugbaren Sonnenenergie, der Gefährdung der frei hängenden Verbindungsleitungen mit dem lokalen Energieversorgungsnetz 2 und der durch elektrische Heizeinrichtungen 7-i voraussichtlich verbrauchten Energie E3 führt.

In einem weiteren Schritt S2 erfolgt eine Anpassung der in mindestens einem lokalen Energiespeicher 8 der Energieversorgungsanlage 1 gespeicherten Energiereserve ER in Abhängigkeit von den erkannten zukünftigen Ereignissen vor deren Eintreten. Wird beispielsweise als Ereignis EV ein zukünftiger Sturm angekündigt, der zu einer voraussichtlichen Verminderung der erzeugbaren Energie E1, zur voraussichtlichen Verminderung der beziehbaren Energie E2 und möglicherweise gleichzeitig zur Erhöhung der zu verbrauchenden Energie E3 führt, so wird in Schritt S2 die in dem lokalen Energiespeicher 8 gespeicherte Energiereserve ER vorsorglich vor Eintreten des Sturms dynamisch erhöht. Die Regelung erfolgt dabei in Abhängigkeit des EEV, sodass die ER mit einem hohen Prozentsatz von der lokal erzeugbaren Energie E1 zur Verfügung gestellt werden kann. Sollte die Energie E1 nicht ausreichen um die geforderte ER zu erreichen, wird der Speicher zusätzlich auch über das Netz geladen. Beispielsweise kann die Regelung auch gezielt Verbraucher wegschalten, um die erforderliche Energiereserve ER zu erreichen.
Fig. 3B zeigt ein weiteres Ausführungsbeispiel des erfindungsgemäßen Verfahrens zur Bereitstellung einer Energiereserve ER bei einer Energieversorgungsanlage. In Schritt S1 wird wie bei dem in Fig. 3A dargestellten Ausführungsbeispiel mindestens ein zukünftiges Ereignis EV durch Auswertung von Ereignismeldungen EM erkannt.

Anschließend wird in Schritt S2 die Energiereserve ER in Abhängigkeit des erkannten zukünftigen Ereignisses vor dessen Eintritt dynamisch angepasst.

In einem weiteren Schritt S3 wird anschließend bei eingestellter Energiereserve ER ein Eigenenergieverbrauch EEV der durch die lokale Energieerzeugungseinheiten 4-i der Energieversorgungsanlage 1 erzeugten Energiemenge durch lokale Energieverbrauchseinheiten 7-i der Energieversorgungsanlage 1 maximiert.

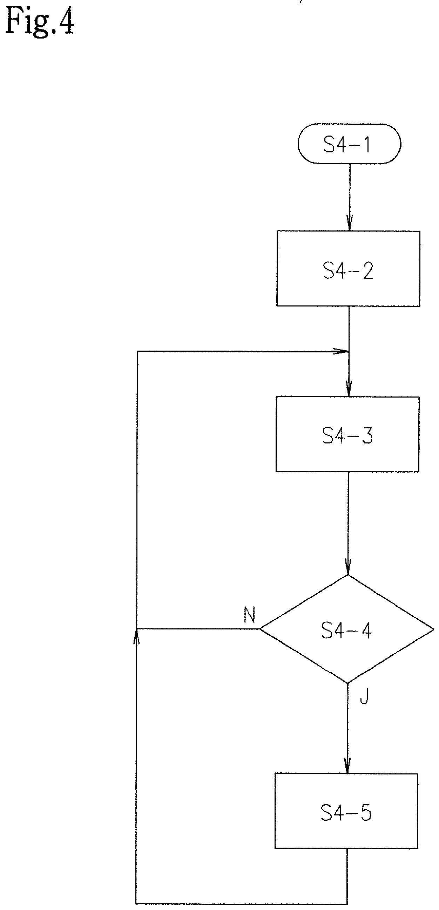

Fig. 4 zeigt ein weiteres Ablaufdiagramm zur Darstellung eines Ausführungsbeispiels des erfindungsgemäßen Verfahrens zum Bereitstellen einer Energiereserve ER. In dem in Fig. 4 dargestellten Ausführungsbeispiel wird nach einem Startschritt S4-1 in einem Schritt S4-2 die vorgehaltene Energiereserve ER auf einen konfigurierbaren Startwert eingestellt.

In einem weiteren Schritt S4-3 wird die Energieversorgungsanlage 1 in einem normalen Betriebsmodus bei eingestellter Energiereserve ER betrieben, wobei vorzugsweise die Steuereinheit 9 der Energieversorgungsanlage 1 den Eigenenergieverbrauch EEV der durch die lokalen Energieerzeugungseinheiten 4-i der Energieversorgungsanlage 1 erzeugten Energiemengen durch die lokalen Energieverbrauchseinheiten 7-i der Energieversorgungsanlage 1 maximiert. Sobald der Auswerteeinheit 10 der Steuereinheit 9 ein Ereignis EV in Schritt S4-4 gemeldet wird, erfolgt in Schritt S4-5 die dynamische Anpassung der lokalen Energiereserve ER auf einen neuen Wert. Anschließend kehrt der Vorgang zu Schritt S4-3 (Normalbetrieb) zurück, bis das nächste Ereignis EV gemeldet wird.

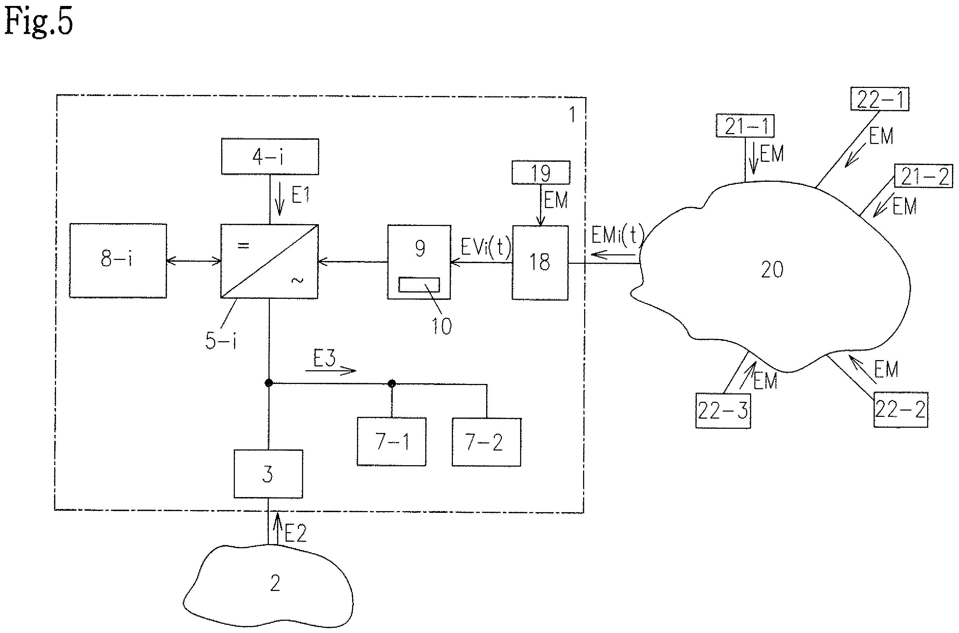

Fig. 5 zeigt ein weiteres Ausführungsbeispiel einer erfindungsgemäßen Energieversorgungsanlage 1. Bei dem dargestellten Ausführungsbeispiel verfügt die Energieversorgungsanlage 1 über eine lokale Aufbereitungseinheit 18 zur Aufbereitung von Ereignismeldungen EM. Diese Ereignismeldungen umfassen einerseits Nachrichten, die von einer Vielzahl unterschiedlicher heterogener Nachrichtenquellen stammen und andererseits Sensordaten, die von einer Vielzahl unterschiedlicher heterogener lokaler Sensoren 19 und/oder entfernter Sensoren 21 stammen. Die Aufbereitungseinheit 18 kann, wie in Fig. 5 dargestellt, der Steuereinheit 9 vorgeschaltet sein. Alternativ kann die Aufbereitungseinheit 18 auch in der Steuereinheit 9 integriert sein. Die Aufbereitungseinheit 18 ist bei dem in Fig. 5 dargestellten Ausführungsbeispiel an ein Datennetzwerk 20 angeschlossen, bei dem es sich um ein lokales Datennetzwerk oder ein überregionales Datennetzwerk, beispielsweise das Internet, handeln kann. An dem Datennetzwerk 20 sind eine Vielzahl entfernter Sensoren 21-1, 21-2 sowie entfernte Nachrichtenquellen 22-1, 22-2, 22-3 angeschlossen, wie in Fig. 5 dargestellt. Die Aufbereitungseinheit 18 kann bei einer möglichen Ausführungsform eine Vorfilterung und/oder eine Vorverarbeitung der Ereignismeldungen EM durchführen, insbesondere von Nachrichten, die von einer Vielzahl unterschiedlicher Nachrichtenquellen 22-i stammen und/oder von Sensordaten, die von einer Vielzahl unterschiedlicher entfernter oder lokaler Sensoren 19, 21-i stammen. Bei einer möglichen Ausführungsform führt die Aufbereitungseinheit 18 eine Vorfilterung und Vorverarbeitung der empfangenen Ereignismeldungen EM hinsichtlich ihrer Zuverlässigkeit durch. Dabei werden vorzugsweise Ereignismeldungen, die von vertrauenswürdigen Nachrichtenquellen stammen, höher gewichtet als Ereignismeldungen von unbekannten Nachrichtenquellen. Beispielsweise können auch längerfristige Wettervorhersagen als eher nicht vertrauenswürdig eingestuft werden. Die gefilterten und/oder vorverarbeiteten Ereignismeldungen EM werden von der Aufbereitungseinheit 18 an die Auswerteeinheit 10 der Steuereinheit 9 gemeldet. Die Auswerteeinheit 10 führt eine dynamische Anpassung der in der mindestens einen lokalen Energiespeichereinheit 8 der Energieversorgungsanlage 1 gespeicherte Energiereserve ER in Abhängigkeit von den vorverarbeiteten Ereignismeldungen bzw. Events durch. Darüber hinaus kann die Auswerteeinheit 10 eine dynamische Anpassung der Anpassungsrate AR zur Anpassung der Energiereserve ER vornehmen. Die von der Aufbereitungseinheit 18 erhaltenen Ereignismeldungen umfassen unterschiedliche Meldungen, die von unterschiedlichen Nachrichtenquellen stammen. Eine mögliche Nachrichtenquelle ist beispielsweise der Server des Netzwerkbetreibers des Energieversorgungsnetzes 2 oder der Server einer Baubehörde. Bei dem in Fig. 5 dargestellten Ausführungsbeispiel wird beispielsweise die erste Nachrichtenquelle 22-1 durch den Server des Netzwerkbetreibers gebildet und liefert als Ereignismeldungen Infrastrukturmeldungen, die den zukünftigen Betrieb des Energieversorgungsnetzwerkes 2 betreffen. Die zweite Nachrichtenquelle 22-2 ist beispielsweise der Server einer Baubehörde, die Baumaßnahmen im Bereich des lokalen Energieversorgungsnetzes 2 an die betroffenen Nutzer bzw. Energieversorgungsanlagenbetreiber meldet. Eine weitere Nachrichtenquelle 22-3 liefert beispielsweise georeferenzierte Wettervorhersagemeldungen oder Störungen hinsichtlich der zukünftigen Brennstoffversorgung mit einem bestimmten Brennstoff. Weiterhin können die Ereignismeldungen EM Sensordaten und/oder Parameter aufweisen, insbesondere Sensordaten und/oder Parameter der lokalen Energieerzeugungseinheiten 4-i, Sensordaten und/oder Parameter der lokalen Energieverbrauchseinheiten 7-i, Sensordaten und/oder Parameter der lokalen Energiespeicher 8-i und/oder Sensordaten und/oder Parameter des Energieversorgungsnetzes 2, beispielsweise die Betriebsfrequenz f des Energieversorgungsnetzes 2.

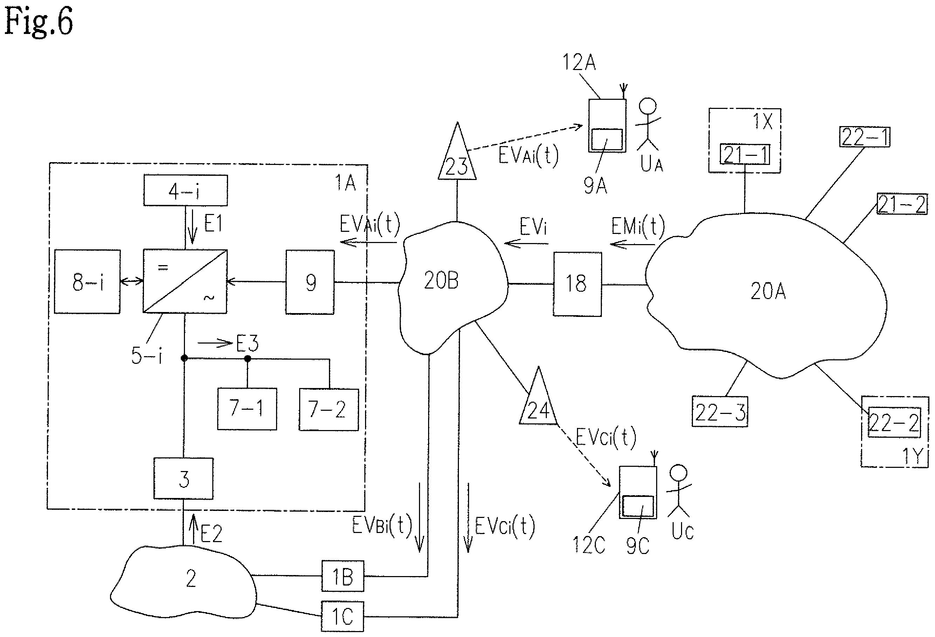

Fig. 6 zeigt ein Ausführungsbeispiel eines möglichen Verbunds von Energieversorgungsanlagen 1 gemäß der Erfindung, die bei einem Energieversorgungsnetz 2 angeschlossen sind. In dem in Fig. 6 dargestellten Ausführungsbeispiel sind an ein gemeinsames Energieversorgungsnetz 2 mehrere Energieversorgungsanlagen EVA 1A, 1B, 1C angeschlossen. Die erste Energieversorgungsanlage 1A ist detailliert dargestellt und entspricht der in Fig. 1 dargestellten Energieversorgungsanlage. Die drei verschiedenen Energieversorgungsanlagen 1A, 1B, 1C sind an ein Datennetzwerk 20A angeschlossen, so dass sie Ereignismeldungen EM bzw. Events EV in einem Strom von Ereignismeldungen erhalten. Dieses Datennetzwerk 20A verteilt vorverarbeitete bzw. vorgefilterte Ereignismeldungen an die Steuereinheiten 9 der verschiedenen Energieversorgungsanlagen 1A, 1B, 1C, wie in Fig. 6 anhand der Pfeile für EVx und EMx schematisch dargestellt. Die Vorfilterung bzw. Vorverarbeitung der Ereignismeldungen EM geschieht durch eine zentrale Aufbereitungseinheit 18, die zwischen einem ersten Datennetzwerk 20A und dem zweiten Datennetzwerk 20B vorgesehen ist. Selbstverständlich können die beiden Datennetzwerke 20A, 20B auch ein integriertes einheitliches Datennetzwerk bilden. Die von verschiedenen Nachrichtenquellen 22-i oder entfernten Sensoren 21-i empfangenen Ereignismeldungen EM werden über das Datennetzwerk 20A der Aufbereitungseinheit 18 zugeführt, welche eine Vorverarbeitung bzw. Vorfilterung der Vielzahl von unterschiedlichen Ereignismeldungen EM vornimmt. Bei einer möglichen Ausführungsform führt die Aufbereitungseinheit 18 zudem eine Umformatierung der Ereignismeldungen EM in ein für die Auswerteeinheiten 10 geeignetes Datenformat durch. Die Aufbereitungseinheit 18 kann beispielsweise in einem Server eines Herstellers einer Energieversorgungsanlage EVA implementiert sein. Die Aufbereitungseinheit 18 filtert die von einer Vielzahl unterschiedlicher heterogener Nachrichtenquellen 22-i stammenden Nachrichten bzw. Ereignismeldungen und die von einer Vielzahl unterschiedlicher heterogener Sensoren stammenden Sensordaten hinsichtlich ihrer Relevanz für die lokale Energieversorgung der betroffenen Energieversorgungsanlagen 1A, 1B, 1C vor. Weiterhin kann die Aufbereitungseinheit 18 eine Vorverarbeitung der erhaltenen Ereignismeldungen durchführen, insbesondere eine Datenformatumsetzung. Bei einer möglichen Ausführungsform gewichtet die Aufbereitungseinheit 18 zusätzlich die erhaltenen Ereignismeldungen EM bzw. Events hinsichtlich der Zuverlässigkeit der Datenquelle, d.h. der Zuverlässigkeit des jeweiligen Sensors oder der jeweiligen Nachrichtenquelle. Die gefilterten und/oder vorverarbeiteten Ereignismeldungen werden von der Aufbereitungseinheit 18 an die verschiedenen Steuereinheiten 9 zur dynamischen Anpassung der in dem jeweiligen Energiespeicher 8 der verschiedenen Energieversorgungsanlagen 1A, 1B, 1C gespeicherten Energiereserven ER_{A}, ER_{B}, ER_{C} über das Datennetzwerk 20B übertragen. Bei dem in Fig. 6 dargestellten Ausführungsbeispiel werden die vorverarbeiteten Ereignismeldungen für die Energieversorgungsanlagen 1A, 1C zudem über einen Access Point 23 und/oder eine Basisstation 24 an tragbare Nutzerendgeräte 12A, 12B der beiden zugehörigen Nutzer bzw. User U_{A}, U_{C} der beiden Energieversorgungsanlagen 1A, 1C drahtlos übertragen. Bei dem in Fig. 6 dargestellten Ausführungsbeispiel sind die tragbaren Geräte 12A, 12C Mobilfunkgeräte, wobei diese jeweils über eine Steuereinheit 9A, 9C verfügen, die eine Applikation zur dynamischen Anpassung der gespeicherten Energiereserve ER_{A}, ER_{C} der jeweiligen Energieversorgungsanlagen 1A, 1C ausführen können. Erhält beispielsweise ein Nutzer U_{A} mit Hilfe seines mobilen Funkgerätes 12A bzw. seines Handy die von der Aufbereitungseinheit 18 vorverarbeiteten Events oder Ereignismeldungen, die für seine Energieversorgungsanlage 1A relevant sind, kann die auf dem Mobilfunkgerät 12A ausgeführte Applikation die notwendige optimale Energiereserve ER_{A} berechnen und beispielsweise dem Nutzer U_{A} über ein Display anzeigen. Bei einer möglichen Ausführungsform kann anschließend der Nutzer U_{A} über eine Nutzerschnittstelle seines Mobilfunkgeräts 12A die berechnete anzupassende Energiereserve ER_{A} für seine Energieversorgungsanlage 1A freigeben bzw. bestätigen. Die berechnete Energiereserve ER_{A} wird dann von dem mobilen Funkgerät über den Access Point 23 und das Datennetzwerk 20B an die Steuereinheit 9A der Energieversorgungsanlage 1A übertragen, welche die in dem Energiespeicher 8 gespeicherte Energiereserve ER_{A} entsprechend anpasst. Bei einer weiteren möglichen Ausführungsform kann der Nutzer U_{A} bei Erhalt einer Ereignismeldung EM von der Aufbereitungseinheit 18, beispielsweise bei einer Sturmwarnung, über die Nutzerschnittstelle seines mobilen Funkgeräts 12A die Energiereserve ERA nach seinem Dafürhalten manuell anpassen. Beispielsweise kann die auf dem Mobilfunkgerät 12A ausgeführte Applikation dem Nutzer einen Empfehlungswert für die einzustellende Energiereserve ER_{A} ausrechnen und anzeigen, wobei der Nutzer die Möglichkeit hat, die berechnete Energiereserve ER_{A} in dieser Höhe zu bestätigen oder manuell zu verändern und erst dann an die Steuereinheit 9A seiner Energieversorgungsanlage 1A zu übertragen. Erhält beispielsweise ein Geschäftsreisender auf einer Geschäftsreise eine für seine Energieversorgungsanlage 1 relevante Ereignismeldung EM auf seinem Mobilfunkgerät 12, ist er in der Lage, die Energiereserve ER entsprechend anzupassen, ohne vor Ort sein zu müssen.

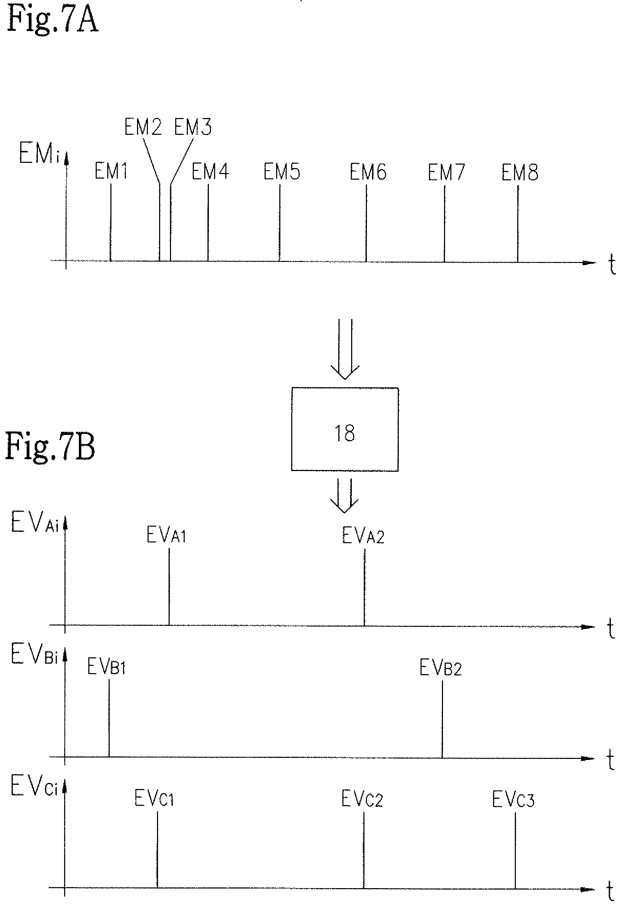

Fig. 7A, 7B zeigen Diagramme zur Verdeutlichung der Funktionsweise der in den Fig. 5, 6 dargestellten Aufbereitungseinheit 18. In Fig. 7A erhält die Aufbereitungseinheit 18 einen Strom heterogener Ereignismeldungen EM, die von verschiedenartigen Nachrichtenquellen und/oder Sensoren stammen können. Die Aufbereitungseinheit 18 filtert für die verschiedenen Energieversorgungsanlagen 1A, 1B, 1C die relevanten Events bzw. Ereignismeldungen heraus, wie in Fig. 7B dargestellt. Beispielsweise betrifft die erste Ereignismeldung EM1 das für die Energieversorgungsanlage 1B relevante Event bzw. Ereignis EVB1, wobei die zweite Ereignismeldung EM2 ein für die dritte Energieversorgungsanlage 1C relevantes Ereignis bzw. Event EVC1 meldet. Die dritte und sechste Ereignismeldung EM3, EM6 betrifft die erste Energieversorgungsanlage 1A des Nutzers U_{A}, der beispielsweise über sein Mobilfunkgerät 12a die entsprechenden Events bzw. Ereignisse erhält. Die Aufbereitungseinheit 18 verteilt somit Ereignismeldungen EM an die relevanten Steuereinheiten 9 der jeweils betroffenen Energieversorgungsanlagen. Ist beispielsweise die erste Ereignismeldung EM1 eine Wetterwarnung, die nur für ein bestimmtes Gebiet relevant ist, in der sich die Energieversorgungsanlage 1A befindet, erhält auch nur die Steuereinheit 9 dieser Energieversorgungsanlage 1A dieses Ereignis von der Aufbereitungseinheit 18 zugestellt. Weiterhin kann die Aufbereitungseinheit 18 eine Vorfilterung der erhaltenen Ereignismeldungen EM durchführen. Bei dem in Fig. 7A, 7B dargestellten Beispiel wird beispielsweise die Ereignismeldung EM5 herausgefiltert, da sie von einer nicht zuverlässigen Nachrichtenquelle stammt. Vorzugsweise werden die Ereignismeldungen EM und die daraus generierten Events EV kryptographisch geschützt übertragen, um Manipulationen zu verhindern. Bei dem in Fig. 7A, 7B dargestellten Beispiel meldet beispielsweise die Ereignismeldung EM6 ein Ereignis, welches sowohl für die erste Energieversorgungsanlage EVA 1A als auch für die dritte Energieversorgungsanlage EVA 1C relevant ist. Diese Ereignismeldung EM6 kann beispielsweise eine Infrastrukturmeldung einer Baubehörde sein, die eine Baumaßnahme in einem Straßenbereich ankündigt, bei der sowohl die erste Energieversorgungsanlage 1A als auch die dritte Energieversorgungsanlage 1C an dem Energieversorgungsnetz 2 angeschlossen ist.

Die Fig. 8A, 8B verdeutlichen die Funktionsweise, welche zuvor bereits mehrmals beschrieben wurde, der Steuereinheit 9 bei einer möglichen Ausführungsform der erfindungsgemäßen Energieversorgungsanlage 1. Zu einem Zeitpunkt t1 erhält die Steuereinheit 9 die Events bzw. eine Ereignismeldung und erhöht in Abhängigkeit zu dieser Ereignismeldung bzw. dem erhaltenen Event die Energiereserve ER von einem Startwert SW auf einen Wert W1, wie in Fig. 8B dargestellt. Bei Eintreffen einer weiteren Ereignismeldung, die jeweils durch eine Auswerteeinheit vorgefiltert bzw. vorverarbeitet ist, erhöht die Steuereinheit 9 die Energiereserve ER weiter auf einen Wert W2. Nach Erhalt der dritten Ereignismeldung bzw. des dritten Events EV3 zum Zeitpunkt t3 reduziert die Steuereinheit 9 die Energiereserve ER auf einen Wert W3, wie in Fig. 8B dargestellt.

Fig. 9A, 9B zeigen Diagramme zur Darstellung einer weiteren möglichen Ausführungsform der erfindungsgemäßen Steuereinheit 9. Zu einem Zeitpunkt t1 erhält die Steuereinheit 9 eine Ereignismeldung bzw. einen Event EV1 und erhöht die Energiereserve mit einer relativ hohen Anpassungsrate AR1 von einem Startwert SW ausgehend auf einen Wert W1, wie in Fig. 9B dargestellt. Zu einem Zeitpunkt t2 erhält die Steuereinheit 9 eine weitere Ereignismeldung bzw. ein Event EV2 und erhöht die Energiereserve mit einer relativ geringen Anpassungsrate AR2 auf einen höheren Wert W2, wie in Fig. 9B dargestellt. Nach Erhalt einer weiteren Ereignismeldung bzw. eines weiteren Events EV3 zum Zeitpunkt t3 reduziert die Steuereinheit 9 dynamisch die Energiereserve ER mit einer negativen Anpassungsrate AR3. Die Höhe der Anpassungsraten AR1, AR2, AR3 hängt von den in den zugehörigen Ereignismeldungen enthaltenen Informationen ab. Wird beispielsweise ein sehr einschneidendes Ereignis, welches zudem unmittelbar bevorsteht, gemeldet, wird die entsprechende Anpassungsrate AR in der Steuereinheit 9 relativ groß eingestellt. Die Anpassungsrate AR wird entsprechend unter Berücksichtigung des Eigenenergieverbrauchs EEV eingestellt. Sollte die geforderte Energiereserve ER in Abhängigkeit vom Ereignis EV und der daraus resultierenden Anpassungsrate AR mit der lokal erzeugten Energie nicht möglich sein, wird der Speicher zusätzlich über das Netz geladen. Grundsätzlich können die Energiereserve ER und die Anpassungsrate AR auch an die Jahreszeit bzw. geographische Lage angepasst werden. So kann im Winter, wo mit der Photovoltaikanlage eher weniger Energie erzeugt werden kann, die Energiereserve ER generell auf einem höheren Niveau gehalten werden.

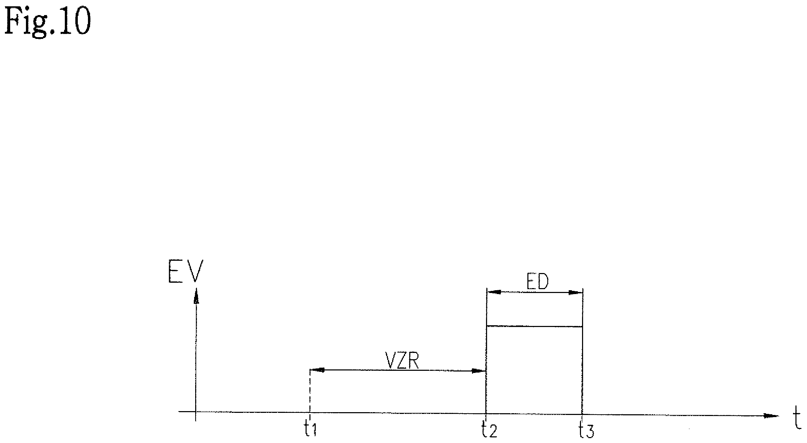

Fig. 10 zeigt ein weiteres Diagramm zur Verdeutlichung von Einflussfaktoren auf die Anpassungsraten AR, wie sie in Fig. 9A, 9B dargestellt sind. Das der Steuereinheit 9 gemeldete Ereignis bzw. Event kann bei einer möglichen Ausführungsform einen Vorlaufzeitraum VZR und eine Ereignisdauer ED angeben. Die Steuereinheit 9 verändert bei einer möglichen Ausführungsform die Anpassungsrate AR, mit welcher die in der mindestens einen Energiespeichereinheit 8 gespeicherte Energiereserve ER angepasst wird in Abhängigkeit von dem Vorlaufzeitraum VZR zwischen dem Empfang einer Ereignismeldung EM zum Zeitpunkt t1, die mindestens ein zukünftiges Ereignis ankündigt, und dem tatsächlichen Ereigniseintritt des durch die Ereignismeldung angekündigten Ereignisses zum Zeitpunkt t2. Weiterhin kann die Steuereinheit 9 bei einer möglichen Ausführungsform die Energiemenge der in der mindestens einen Energiespeichereinheit 8 gespeicherten Energiereserve ER in Abhängigkeit von einer prognostizierten oder wahrscheinlichen Ereignisdauer ED des in der Ereignismeldung angekündigten Ereignisses EV anpassen. Beispielsweise kann eine Wetterwarnmeldung, die an die Steuereinheit 9 zum Zeitpunkt t1 gemeldet wird, angeben, dass die Wetterfront auf die Position der Energieversorgungsanlage 1 in etwa fünf Stunden trifft und dann dieses Wetter an dieser Stelle etwa zwei Tage andauern wird. Je geringer der Vorlaufzeitraum VZR ist und je höher die notwendige Anpassung der Energiereserve ER ist, desto höher wird die Anpassungsrate AR1 durch die Steuereinheit 9 der Energieversorgungsanlage 1 eingestellt. Führt ein angekündigtes Ereignis EV zu einer voraussichtlichen Verminderung der lokal erzeugbaren Energie E1, muss die Energiereserve ER umso höher eingestellt werden, je länger die voraussichtliche Ereignisdauer ED des jeweiligen Ereignisses ist. Mit dem erfindungsgemäßen Verfahren kann die Energiemenge, die für den Notstromfall durch einen Energiespeicher 8 zur Verfügung steht, dynamisch angepasst werden. Die Anpassung erfolgt dabei unter Berücksichtigung des Eigenenergieverbrauchs EEV. Die Auslösung dieser Änderung kann durch interne und/oder externe Vorgaben bzw. Ereignisse erfolgen. Bei einer möglichen Ausführungsform erfolgt die Anpassung der Energiereserve ER automatisch kontinuierlich in Abhängigkeit von den erhaltenen Ereignismeldungen. Bei einer alternativen Ausführungsform erfolgt die Anpassung der Energiereserve ER periodisch in vorgegebenen Zeitabständen. Die Ereignismeldungen EM können in beliebigen Datenformaten an die Aufbereitungseinheit 18 bzw. die Steuereinheit 9 übertragen werden, beispielsweise als E-Mail, SMS oder in einem Datenpaket. Die Ereignismeldungen bzw. Nachrichten können dabei entweder drahtverbunden oder drahtlos von den Nachrichtenquellen bzw. Sensoren zu der Aufbereitungseinheit 18 bzw. der Steuereinheit 9 übertragen werden.

Bei einer weiteren möglichen Ausführungsform der erfindungsgemäßen Energieversorgungsanlage 1 hängt die von den lokalen Energieerzeugungseinheiten 4-i erzeugbare Energie E1 von der jeweiligen Konfiguration der Energieversorgungsanlage ab. Beispielsweise besitzt eine erste Energieversorgungsanlage 1-1 drei Windkraftanlagen und keine Photovoltaikanlage, eine zweite Energieversorgungsanlage 1-2 zwei Windkraftanlagen und eine Photovoltaikanlage, eine dritte Energieversorgungsanlage 1-3 eine Windkraftanlage und zwei Photovoltaikanlagen und eine vierte Energieversorgungsanlage 1-4 keine Windkraftanlage und drei Photovoltaikanlagen. Die von den verschiedenen Energieversorgungsanlagen 1-i erzeugbare Energie E1 bei schlechtem Wetter mit hohen Windstärken und geringer Sonneneinstrahlung hängt von der Konfiguration bzw. der Zusammensetzung von verschiedenen lokalen Energieerzeugungseinheiten ab. Während die erste Energieversorgungsanlage 1-1 mit drei Windkraftanlagen bei schlechtem Wetter und viel Wind viel Energie lokal erzeugt, erzeugt die vierte Energieversorgungsanlage 1-4, die ausschließlich über Photovoltaikanlagen verfügt, relativ wenig Energie. Bei einer möglichen Ausführungsform der erfindungsgemäßen Energieversorgungsanlage 1 stellt die Steuereinheit 9 demzufolge die Energiereserve ER nicht nur in Abhängigkeit von den erhaltenen Ereignismeldungen bzw. Events ein, sondern zusätzlich in Abhängigkeit von der gespeicherten lokalen Konfiguration CONFIG der jeweiligen Energieversorgungsanlage 1. Verfügt bei dem dargestellten Beispiel bei einer aufziehenden Wetterfront mit viel Wind und wenig Sonne die Energieversorgungsanlage 1 über eine Konfiguration mit vielen Windkraftanlagen und wenigen Photovoltaikanlagen, wird die Energiereserve ER durch die Steuereinheit 9 reduziert, während bei einer anderen Konfiguration der Energieversorgungsanlage 1 mit wenig Windkraftanlagen und vielen Photovoltaikanlagen die Energiereserve ER bei Aufziehen einer Schlechtwetterfront mit viel Wind und wenig Sonne erhöht werden muss. Bei einer möglichen Ausführungsform der erfindungsgemäßen Energieversorgungsanlage ist die Anlagenkonfiguration, insbesondere die Art und Leistungsfähigkeit der verschiedenen Energieerzeugungseinheiten 4-i, in einem lokalen Konfigurationsdatenspeicher der Steuereinheit 9 abgespeichert und wird bei der Auswertung der Ereignismeldungen EM zur Anpassung der Energiereserve ER berücksichtigt.

Die Energiereserve ER wird bei dem erfindungsgemäßen Verfahren dynamisch angepasst, wobei dies auch aufgrund von Netzfrequenzschwankungen des Energieversorgungsnetzes 2 erfolgen kann. Ist die gemessene Netzfrequenz f des Energieversorgungsnetzes 2 relativ gering und liegt unter einer Nominalnetzfrequenz f0, kann die Energiereserve ER durch die Steuereinheit 9 etwas höher eingestellt werden, da die Wahrscheinlichkeit für einen Netzausfall steigt. Zusätzlich oder anstelle der Messung der Netzfrequenz können auch die Oberwellen gemessen werden und entsprechend die ER eingestellt werden.

Bei einer möglichen Ausführungsform kommunizieren die Steuereinheiten 9 der verschiedenen Energieversorgungsanlagen 1 über eine Kommunikationsschnittstelle miteinander. So können beispielsweise die verschiedenen Steuereinheiten 9 der verschiedenen Energieversorgungsanlagen 1 sich gegenseitig ihre aktuell vorgehaltenen Energiereserven ER melden.

Bei einer weiteren möglichen Ausführungsform der erfindungsgemäßen Energieversorgungsanlage 1 können auch historischer Energiefluss bzw. Sensordaten bei der Anpassung der Energiereserve ER mit berücksichtigt werden. Bei dem erfindungsgemäßen Verfahren wird die Energiereserve bzw. Notstromreserve ER einer lokalen Energieversorgungsanlage 1 vorausschauend optimiert eingestellt, um die lokale Energieversorgung möglichst robust gegenüber zukünftigen Szenarien bzw. Ereignisfolgen zu machen und entsprechend den Eigenenergieverbrauch EEV entsprechend hoch zu halten. Insbesondere bei sicherheitskritischen Energieverbrauchseinheiten 7-i kann somit die Ausfallwahrscheinlichkeit der lokalen Energieversorgung minimiert bzw. die verbleibende Restbetriebszeit bei Eintreten bestimmter Szenarien bzw. Ereignisfolgen maximiert werden.

## Patentansprüche

1. Energieversorgungsanlage, EVA, (1) die geeignet ist, Energie aus einem Energieversorgungsnetz, EVN, (2) zu beziehen oder in das Energieversorgungsnetz, EVN, (2) einzuspeisen,
wobei die Energieversorgungsanlage, EVA, (1) aufweist:
(a) mindestens eine lokale Energieerzeugungseinheit (4-i) zur Erzeugung von Energie,
(b) mindestens eine lokale Energieverbrauchseinheit (7-i) zum Verbrauch von Energie,
(c) mindestens einem lokalen Energiespeicher (8-i) zur Speicherung von Energie; und
(d) eine Steuereinheit (9), welche einen Eigenenergieverbrauch, EEV, der von der mindestens einen lokalen Energieerzeugungseinheit (4-i) erzeugten Energiemenge durch die mindestens eine lokale Energieverbrauchseinheit (7-i) der Energieversorgungsanlage, EVA, (1) sowie die in dem mindestens einen Energiespeicher (8-i) gespeicherte Energiemenge steuert;
wobei die Steuereinheit (9) nach Erkennen mindestens eines vorhersehbaren zukünftigen Ereignisses, EV, das eine Energiemenge (E1) der durch die Energieerzeugungseinheiten (4-i) erzeugbaren Energie und/oder eine Energiemenge (E2) der aus dem Energieversorgungsnetz (2) beziehbaren Energie und/oder eine Energiemenge (E3) der durch die Energieverbrauchseinheiten (7-i) verbrauchten Energie beeinflusst, eine in dem mindestens einen lokalen Energiespeicher (8-i) gespeicherte Energiereserve (ER) in Abhängigkeit von den erkannten Ereignissen vor Eintreten dieser Ereignisse vorsorglich dynamisch anpasst,
wobei die gespeicherte Energiereserve (ER) eine Energiemenge umfasst, die für einen Notstromfall vorgehalten wird,
**dadurch gekennzeichnet, dass**
die gespeicherte Energiereserve (ER) in Abhängigkeit einer Ausfallwahrscheinlichkeit und einer Ausfalldauer beeinflusst wird.

2. Energieversorgungsanlage nach Anspruch 1,
wobei die Steuereinheit (9) eine Auswerteeinheit (10) aufweist, welche Ereignismeldungen (EM), die von Nachrichtenquellen empfangene Nachrichten (22-i) und/oder von Sensoren (19, 21-i) empfangene Sensordaten umfassen, zur Vorhersage von zukünftigen für die lokale Energieversorgung relevanten Ereignissen auswertet.

3. Energieversorgungsanlage nach Anspruch 1 oder 2,
wobei die Steuereinheit (9) die Energiereserve (ER) in Abhängigkeit von einer lokal gespeicherten Konfiguration der Energieversorgungsanlage (1) einstellt.

4. Energieversorgungsanlage nach einem der vorangehenden Ansprüche 1 bis 3,
wobei die Steuereinheit (9) bei eingestellter Energiereserve (ER) den Eigenenergieverbrauch, EEV, der durch die lokalen Energieerzeugungseinheiten (4-i) der Energieversorgungsanlage (1) erzeugten Energiemenge (E1) durch die lokalen Energieverbrauchseinheiten (7-i) der Energieversorgungsanlage (1) automatisch maximiert.

5. Energieversorgungsanlage nach einem der vorangehenden Ansprüche 1 bis 4,
wobei die lokalen Energiespeicher (8-i) der Energieversorgungsanlage (1), Batteriespeichereinheiten zur Speicherung elektrischer Energie,
Speichereinheiten zur Speicherung potentieller und/oder kinetischer Energie,
Brennstoffspeichereinheiten zur Speicherung chemischer Energie und/oder
Thermospeichereinheiten zur Speicherung thermischer Energie aufweisen.

6. Energieversorgungsanlage nach einem der vorangehenden Ansprüche 1 bis 5,
wobei die durch die Steuereinheit (9) angepasste Energiereserve (ER) in dem lokalen Energiespeicher (8) der Energieversorgungsanlage (1) oder auf mehreren verschiedenen lokalen Energiespeichern (8-i) der Energieversorgungsanlage (1) verteilt gespeichert wird.

7. Energieversorgungsanlage nach einem der vorangehenden Ansprüche 1 bis 6,
wobei bei einem aus den vorhergesagten Ereignissen (EV) resultierenden erwarteten Abfall der lokal erzeugbaren Energiemenge (E1) und/oder bei einem erwarteten Abfall der aus dem Energieversorgungsnetz, EVN, (2) beziehbaren Energiemenge (E2) und/oder bei einem erwarteten Anstieg der lokal verbrauchten Energiemenge (E3) die gespeicherte Energiereserve (ER) durch die Steuereinheit (9) der Energieversorgungsanlage, EVA, (1) automatisch vorsorglich erhöht wird, und
wobei bei einem aus den vorhergesagten Ereignissen (EV) resultierenden erwarteten Anstieg der lokal erzeugbaren Energiemenge (E1) und/oder bei einem erwarteten Anstieg der aus dem Energieversorgungsnetz (2) beziehbaren Energiemenge (E2) und/oder bei einem erwarteten Abfall der lokal verbrauchten Energiemenge (E3) die gespeicherte Energiereserve (ER) durch die Steuereinheit (9) der Energieversorgungsanlage, EVA, (1) automatisch vorsorglich vermindert wird.

8. Energieversorgungsanlage nach einem der vorangehenden Ansprüche 1 bis 7,
wobei die Steuereinheit (9) eine Anpassungsrate (AR), mit welcher die in dem mindestens einen Energiespeicher (8) gespeicherte Energiereserve (ER) angepasst wird, in Abhängigkeit des Eigenenergieverbrauchs (EEV) und/oder von einem Vorlaufzeitraum (VZR) zwischen dem Empfang einer Ereignismeldung (EM), die mindestens ein zukünftiges Ereignis ankündigt, und dem tatsächlichen Ereigniseintritt des durch die Ereignismeldung (EM) angekündigten Ereignisses, verändert.

9. Energieversorgungsanlage nach einem der vorangehenden Ansprüche 1 bis 8,
wobei die Steuereinheit (9) die Energiemenge der in dem mindestens einen Energiespeicher (8) gespeicherten Energiereserve (ER) in Abhängigkeit von einer prognostizierten oder wahrscheinlichen Ereignisdauer (ED) des in der Ereignismeldung (EM) angekündigten Ereignisses anpasst.

10. Energieversorgungsanlage nach einem der vorangehenden Ansprüche 1 bis 9,
wobei eine Aufbereitungseinheit (18) Ereignismeldungen (EM), insbesondere Nachrichten (N), die von einer Vielzahl unterschiedlicher heterogener Nachrichtenquellen (22-i) stammen, und/oder Sensordaten, die von einer Vielzahl unterschiedlicher heterogener Sensoren (19, 21-i) stammen, hinsichtlich ihrer Relevanz für die lokale Energieversorgung der Energieversorgungsanlage (1) vorfiltert und/oder vorverarbeitet, insbesondere hinsichtlich ihrer Zuverlässigkeit gewichtet, und die gefilterten und/oder vorverarbeiteten insbesondere umformatierten Ereignismeldungen (EM) an die Steuereinheit (9) zur dynamischen Anpassung der in dem mindestens einen lokalen Energiespeicher (8) der Energieversorgungsanlage (1) gespeicherten Energiereserve (ER) und/oder zur dynamischen Anpassung der Anpassungsrate (AR), mit welcher die Energiereserve (ER) angepasst wird, überträgt.

11. Energieversorgungsanlage nach einem der vorangehenden Ansprüche 1 bis 10,
wobei die Ereignismeldungen (EM) Meldungen, die für den laufenden Netzbetrieb des Energieversorgungsnetzes, EVN, relevant sind, insbesondere Infrastrukturmeldungen hinsichtlich der öffentlichen Infrastruktur und/oder Netzinfrastruktur, aufweisen, welche von einem Server eines Netzwerkbetreibers und/oder einer Baubehörde stammen, und/oder
wobei die Ereignismeldungen (EM) georeferenzierte Wettervorhersagemeldungen und/oder Wetterwarnmeldungen aufweisen, die von einem Server eines Wettervorhersagedienstes und/oder eines Versicherungsunternehmens stammen, und/oder wobei die Ereignismeldungen (EM) Meldungen hinsichtlich der Brennstoffversorgung mit Brennstoffen aufweisen, die von einem Server eines Brennstofflieferanten und/oder eines Nachrichtendienstes stammen.

12. Energieversorgungsanlage nach einem der vorangehenden Ansprüche 1 bis 11,
wobei die Ereignismeldungen (EM) Sensordaten und/oder Parameter aufweisen, insbesondere Sensordaten und/oder Parameter der lokalen Energieerzeugungseinheiten (4-i), Sensordaten und/oder Parameter der lokalen Energieverbrauchseinheiten (7-i),
Sensordaten und/oder Parameter der lokalen Energiespeicher (8-i) und/oder
Sensordaten und/oder Parameter des Energieversorgungsnetzes (2) .

13. Steuereinheit (9) für eine Energieversorgungsanlage (1), die geeignet ist, Energie aus einem Energieversorgungsnetz (2) zu beziehen oder in das Energieversorgungsnetz (2) einzuspeisen,
wobei die Steuereinheit (9) einen Eigenenergieverbrauch (EEV) der von mindestens einer lokalen Energieerzeugungseinheit (4-i) der Energieversorgungsanlage (1) erzeugten Energie durch mindestens eine lokale Energieverbrauchseinheit (7-i) der Energieversorgungsanlage (1) sowie die in mindestens einem lokalen Energiespeicher (8) der Energieversorgungsanlage, EVA, (1) gespeicherte Energiemenge steuert,
wobei die Steuereinheit (9) nach Erkennen mindestens eines vorhersehbaren zukünftigen Ereignisses (EV) das die Energiemenge (E1) der durch die Energieerzeugungseinheiten (4-i) erzeugbaren Energie und/oder die Energiemenge (E2) der aus dem Energieversorgungsnetz (2) beziehbaren Energie und/oder die Energiemenge (E3) der durch die Energieverbrauchseinheiten (7-i) verbrauchten Energie beeinflusst, eine in dem mindestens einen lokalen Energiespeicher (8) gespeicherte Energiereserve (ER) in Abhängigkeit von den erkannten Ereignissen, EV, vor Eintreten dieser Ereignisse vorsorglich dynamisch anpasst,
wobei die gespeicherte Energiereserve (ER) eine Energiemenge umfasst, die für einen Notstromfall vorgehalten wird, **dadurch gekennzeichnet, dass**
die gespeicherte Energiereserve (ER) in Abhängigkeit einer Ausfallwahrscheinlichkeit und einer Ausfalldauer beeinflusst wird.

14. Verfahren zum Bereitstellen einer Energiereserve (ER) bei einer Energieversorgungsanlage (1) mit den Schritten:
- Erkennen (S1) von mindestens einem zukünftigen Ereignis, EV, das die Energiemenge (E1) der durch eine Energieerzeugungseinheit (4-i) der Energieversorgungsanlage (1) erzeugbaren Energie und/oder die Energiemenge (E2) der aus einem Energieversorgungsnetz (2) durch die Energieversorgungsanlage (1) beziehbaren Energie, E2, und/oder die Energiemenge (E3) von durch Energieverbrauchseinheiten (7-i) der Energieversorgungsanlage (1) verbrauchten Energie beeinflusst;
- Einstellen (S2) der in mindestens einem lokalen Energiespeicher (8) der Energieversorgungsanlage (1) gespeicherten Energiereserve (ER) in Abhängigkeit von den erkannten zukünftigen Ereignissen (EV) vor deren Eintreten,
wobei die gespeicherte Energiereserve (ER) eine Energiemenge umfasst, die für einen Notstromfall vorgehalten wird,
**dadurch gekennzeichnet, dass**
die gespeicherte Energiereserve (ER) in Abhängigkeit einer Ausfallwahrscheinlichkeit und einer Ausfalldauer beeinflusst wird.

15. Verfahren nach Anspruch 14,
wobei die gespeicherte Energiereserve (ER) zusätzlich in Abhängigkeit von einer momentanen Konfiguration der Energieversorgungsanlage (1) eingestellt wird.

16. Verfahren nach Anspruch 14 oder 15,
wobei bei eingestellter Energiereserve (ER) ein Eigenenergieverbrauch (EEV) der durch lokale Energieerzeugungseinheiten (4-i) der Energieversorgungsanlage (1) erzeugten Energiemenge durch lokale Energieverbrauchseinheiten (7-i) der Energieversorgungsanlage (1) maximiert wird.

17. Verfahren nach einem der Ansprüche 14 bis 16, wobei das Energieversorgungsnetz (2) hinsichtlich dessen Frequenz und/oder Oberwellen überwacht wird, und wobei, falls ein möglicher Netzausfall des Energieversorgungsnetzes (2) erkannt wird, die Energiereserve (ER) angepasst wird.

## Claims

1. Energy supply system, EVA, (1) which is suitable for drawing energy from an energy supply network, EVN, (2) or feeding energy into the energy supply network, EVN, (2), the energy supply system, EVA, (1) having:
a) at least one local energy generation unit (4-i) for generating energy,
b) at least one local energy consumption unit (7-i) for consuming energy,
c) at least one local energy store (8-i) for storing energy; and
d) a control unit (9), which controls an internal energy consumption, EEV, by the at least one local energy consumption unit (7-i) of the energy supply system, EVA, (1), of the energy amount generated by the at least one local energy generation unit (4-i), and controls the energy amount stored in the at least one energy store (8-i);
the control unit (9), after the detection of at least one predictable future event, EV, which influences an energy amount (E1) of the energy generable by the energy generation units (4-i) and/or an energy amount (E2) of the energy drawable from the energy supply network (2) and/or an energy amount (E3) of the energy consumed by the energy consumption units (7-i), dynamically adapting, by way of precaution, an energy reserve (ER) stored in the at least one local energy store (8-i) as a function of the detected events before the occurrence of these events,
the stored energy reserve (ER) comprising an energy amount which is reserved for an emergency energy scenario,
**characterised in that**
the stored energy reserve (ER) is influenced as a function of a probability of failure and a duration of failure.

2. Energy supply system according to claim 1,
wherein the control unit (9) has an evaluation unit (10) which evaluates event reports (EM), comprising news (22-1) received from news sources and/or sensor data received from sensors (19, 21-i), to predict future events which are relevant to the local energy supply.

3. Energy supply system according to either claim 1 or claim 2,
wherein the control unit (9) adjusts the energy reserve (ER) as a function of a locally stored configuration of the energy supply system (1).

4. Energy supply system according to any of preceding claims 1 to 3,
wherein when the energy reserve (ER) is adjusted the control unit (9) automatically maximises the internal energy consumption, EEV, by the local energy consumption units (7-i) of the energy supply system (1), of the energy amount (E1) generated by the local energy generation units (4-1) of the energy supply system (1).

5. Energy supply system according to any of preceding claims 1 to 4,
wherein the local energy store (8-i) of the energy supply system (1) have battery storage units for storing electrical energy,
storage units for storing potential and/or kinetic energy, fuel storage units for storing chemical energy, and/or thermal storage units for storing thermal energy.

6. Energy supply system according to any of preceding claims 1 to 5,
wherein the energy reserve (ER) adapted by the control unit (9) is stored in the local energy store (8) of the energy supply system (1) or stored distributed over a plurality of different local energy stores (8-1) of the energy supply system (1).

7. Energy supply system according to any of preceding claims 1 to 6,
wherein, in the case of an expected failure of the locally generable energy amount (E1) as a result of the predicted events (EV) and/or in the case of an expected failure of the energy amount (E2) drawable from the energy supply network, EVN, (2) and/or in the case of an expected rise in the locally consumed energy amount (E3), the stored energy reserve (ER) is automatically increased, by way of precaution, by the control unit (9) of the energy supply system, EVA, (1), and
wherein, in the case of an expected rise in the locally generable energy amount (E1) as a result of the predicted events (EV) and/or in the case of an expected rise in the energy amount (E2) drawable from the energy supply network (2) and/or in the case of an expected rise in the locally consumed energy amount (E3), the stored energy reserve (ER) is automatically reduced, by way of precaution, by the control unit (9) of the energy supply system, EVA, (1).

8. Energy supply system according to any of preceding claims 1 to 7,
wherein the control unit (9) alters an adaptation rate (AR) at which the energy reserve (ER) stored in the at least one energy store (8) is adapted, as a function of the internal energy consumption (EEV), and/or of a waiting time (VZR) between the reception of an event report (EM) announcing at least one future event and the actual occurrence of the event announced by the event report (EM).

9. Energy supply system according to any of preceding claims 1 to 8,
wherein the control unit (9) adapts the energy amount of the energy reserve (ER) stored in the at least one energy store (8) as a function of a predicted or probable event duration (ED) of the event announced in the event report (EM).

10. Energy supply system according to any of preceding claims 1 to 9,
wherein a preparation unit (18) pre-filters and/or pre-processes event reports (EM), in particular news (N) originating from a plurality of different, heterogeneous news sources (22-i) and/or sensor data originating from a plurality of different, heterogeneous sensors (19, 21-i), for relevance to the local energy supply of the energy supply system (1), in particular weighting them for reliability, and passes the filtered and/or pre-processed, in particular reformatted, event reports (EM) to the control unit (9) for dynamic adaptation of the energy reserve (ER) stored in the at least one local energy store (8) of the energy supply system (1) and/or for dynamic adaptation of the adaptation rate (AR) at which the energy reserve (ER) is adapted.

11. Energy supply system according to any of preceding claims 1 to 10,
wherein the event reports (EM) comprise reports relevant to the continuous network operation of the energy supply network, EVN, in particular infrastructure reports on public infrastructure and/or network infrastructure, originating from a server of a network operator and/or of a building authority, and/or
wherein the event reports (EM) comprise georeferenced weather forecast reports and/or weather alert reports originating from a server of a weather forecast service and/or of an insurance company, and/or
wherein the event reports (EM) comprise reports on the supply of fuels originating from a server of a fuel supplier and/or of a news service.

12. Energy supply system according to any of preceding claims 1 to 11,
wherein the event reports (EM) comprise sensor data and/or parameters, in particular sensor data and/or parameters of the local energy generation units (4-i),
sensor data and/or parameters of the local energy consumption units (7-i),
sensor data and/or parameters of the local energy store (8-i), and/or
sensor data and/or parameters of the energy supply network (2) .

13. Control unit (9) for an energy supply system (1) which is suitable for drawing energy from an energy supply network (2) or feeding energy into the energy supply network (2),
the control unit (9) controlling an internal energy consumption (EEV), by at least one local energy consumption unit (7-i) of the energy supply system (1), of the energy amount generated by at least one local energy generation unit (4-i) of the energy supply system (1), and controlling the energy amount stored in at least one local energy store (8) of the energy supply system, EVA, (1),
the control unit (9), after the detection of at least one predictable future event (EV) which influences the energy amount (E1) of the energy generable by the energy generation units (4-i) and/or the energy amount (E2) of the energy drawable from the energy supply network (2) and/or the energy amount (E3) of the energy consumed by the energy consumption units (7-i), dynamically adapting, by way of precaution, an energy reserve (ER) stored in the at least one local energy store (8) as a function of the detected events, EV, before the occurrence of these events,
the stored energy reserve (ER) comprising an energy amount which is reserved for an emergency energy scenario,
**characterised in that**
the stored energy reserve (ER) is influenced as a function of a probability of failure and a duration of failure.

14. Method for providing an energy reserve (ER) in an energy supply system (1), comprising the steps of:
- detecting (S1) at least one future event, EV, which influences the energy amount (E1) of the energy generable by an energy generation unit (4-i) of the energy supply system (1) and/or the energy amount (E2) of the energy, E2, drawable from an energy supply network (2) by the energy supply system (1) and/or the energy amount (E3) of the energy consumed by the energy consumption units (7-i) of the energy consumption system (1);
- adjusting (S2) the energy reserve (ER) stored in at least one local energy store (8) of the energy supply system (1) as a function of the detected future events (EV) before they occur,
the stored energy reserve (ER) comprising an energy amount which is reserved for an emergency energy scenario,
**characterised in that**
the stored energy reserve (ER) is influenced as a function of a probability of failure and a duration of failure.

15. Method according to claim 14,
wherein the stored energy reserve (ER) is additionally adjusted as a function of a present configuration of the energy supply system (1).

16. Method according to either claim 14 or claim 15,
wherein when the energy reserve (ER) is adjusted an internal energy consumption (EEV), by local energy consumption units (7-i) of the energy supply system (1), of the energy amount generated by local energy generation units (4-1) of the energy supply system (1) is maximised.

17. Method according to any of claims 14 to 16, wherein the energy supply network (2) is monitored for the frequency and/or harmonics thereof, and wherein, if a possible network failure of the energy supply network (2) is detected, the energy reserve (ER) is adapted.

## Revendications

1. Installation d'alimentation en énergie, EVA, (1) qui est adaptée à prélever de l'énergie d'un réseau d'alimentation en énergie, EVN, (2) ou à en injecter dans le réseau d'alimentation en énergie, EVN, (2), laquelle installation d'alimentation en énergie, EVA, (1) présente :
a) au moins une unité de production d'énergie locale (4-i) pour produire de l'énergie,
b) au moins une unité de consommation d'énergie locale (7-i) pour consommer de l'énergie,
(c) au moins un dispositif de stockage d'énergie local (8-i) pour stocker de l'énergie ; et
(d) une unité de commande (9) qui commande une consommation propre d'énergie, EEV, de la quantité d'énergie produite par ladite au moins une unité de production d'énergie locale (4-i) par ladite au moins une unité de consommation d'énergie locale (7-i) de l'installation d'alimentation en énergie, EVA, (1) ainsi que la quantité d'énergie stockée dans ledit au moins un dispositif de stockage d'énergie (8-i) ;
dans laquelle l'unité de commande (9), après avoir détecté au moins un événement futur prévisible, EV, qui influence une quantité d'énergie (E1) de l'énergie pouvant être produite par les unités de production d'énergie (4-i) et/ou une quantité d'énergie (E2) de l'énergie pouvant être prélevée du réseau d'alimentation en énergie (2) et/ou une quantité d'énergie (E3) de l'énergie consommée par les unités de consommation d'énergie (7-i), adapte dynamiquement, à titre préventif, une réserve d'énergie (ER) stockée dans ledit au moins un dispositif de stockage d'énergie local (8-i) en fonction des événements détectés avant la survenue de ces événements,
dans laquelle la réserve d'énergie stockée (ER) comprend une quantité d'énergie qui est réservée pour une situation d'alimentation de secours,
**caractérisée en ce que**
la réserve d'énergie stockée (ER) est influencée en fonction d'une probabilité de défaillance et d'une durée de défaillance.

2. Installation d'alimentation en énergie selon la revendication 1,
dans laquelle l'unité de commande (9) présente une unité d'évaluation (10) qui évalue des messages d'événements (EM) qui comprennent des messages (22-i) reçus de sources de messages et/ou des données de capteurs reçues de capteurs (19, 21-i) pour prévoir des événements futurs pertinents pour l'alimentation en énergie locale.

3. Installation d'alimentation en énergie selon la revendication 1 ou 2,
dans laquelle l'unité de commande (9) règle la réserve d'énergie (ER) en fonction d'une configuration de l'installation d'alimentation en énergie (1) stockée localement.

4. Installation d'alimentation en énergie selon l'une des revendications 1 à 3 précédentes,
dans laquelle, lorsque la réserve d'énergie (ER) est réglée, l'unité de commande (9) maximise automatiquement la consommation propre d'énergie, EEV, de la quantité d'énergie (E1) produite par les unités de production d'énergie locales (4-i) de l'installation d'alimentation en énergie (1) par les unités de consommation d'énergie locales (7-i) de l'installation d'alimentation en énergie (1).

5. Installation d'alimentation en énergie selon l'une des revendications 1 à 4 précédentes,
dans laquelle les unités de stockage d'énergie locales (8-i) de l'installation d'alimentation en énergie (1) présentent des unités de stockage à batterie pour le stockage d'énergie électrique,
des unités de stockage pour le stockage d'énergie potentielle et/ou cinétique,
des unités de stockage à combustible pour le stockage d'énergie chimique et/ou
des unités de stockage thermique pour le stockage d'énergie thermique.

6. Installation d'alimentation en énergie selon l'une des revendications 1 à 5 précédentes,
dans laquelle la réserve d'énergie (ER) adaptée par l'unité de commande (9) est stockée dans le dispositif de stockage d'énergie local (8) de l'installation d'alimentation en énergie (1) ou répartie sur plusieurs dispositifs de stockage d'énergie locaux différents (8-i) de l'installation d'alimentation en énergie (1).

7. Installation d'alimentation en énergie selon l'une des revendications 1 à 6 précédentes,
dans laquelle, en cas de baisse attendue de la quantité d'énergie (E1) pouvant être produite localement et/ou en cas de baisse attendue de la quantité d'énergie (E2) pouvant être prélevée du réseau d'alimentation en énergie, EVN, (2) et/ou en cas d'augmentation attendue de la quantité d'énergie (E3) consommée localement, résultant des événements prévus (EV), la réserve d'énergie (ER) stockée est automatiquement augmentée à titre préventif par l'unité de commande (9) de l'installation d'alimentation en énergie, EVA, (1), et
dans laquelle, en cas d'augmentation attendue de la quantité d'énergie (E1) pouvant être produite localement et/ou en cas d'augmentation attendue de la quantité d'énergie (E2) pouvant être prélevée du réseau d'alimentation en énergie (2) et/ou en cas de diminution attendue de la quantité d'énergie (E3) consommée localement, résultant des événements prévus (EV), la réserve d'énergie stockée (ER) est automatiquement diminuée à titre préventif par l'unité de commande (9) de l'installation d'alimentation en énergie, EVA, (1).

8. Installation d'alimentation en énergie selon l'une des revendications 1 à 7 précédentes,
dans laquelle l'unité de commande (9) modifie un taux d'adaptation (AR), avec lequel la réserve d'énergie (ER) stockée dans ledit au moins un dispositif de stockage d'énergie (8) est adaptée, en fonction de la consommation propre d'énergie (EEV) et/ou d'un intervalle de temps (VZR) entre la réception d'un message d'événement (EM) annonçant au moins un événement futur et la survenue effective de l'événement annoncé par le message d'événement (EM).

9. Installation d'alimentation en énergie selon l'une des revendications 1 à 8 précédentes,
dans laquelle l'unité de commande (9) adapte la quantité d'énergie de la réserve d'énergie (ER) stockée dans ledit au moins un dispositif de stockage d'énergie (8) en fonction d'une durée d'événement prédite ou probable (ED) de l'événement annoncé dans le message d'événement (EM).

10. Installation d'alimentation en énergie selon l'une des revendications 1 à 9 précédentes,
dans laquelle une unité de traitement (18) préfiltre et/ou prétraite des messages d'événements (EM), en particulier des messages (N) qui proviennent d'une pluralité de sources de messages hétérogènes différentes (22-i) et/ou des données de capteurs qui proviennent d'une pluralité de capteurs hétérogènes différents (19, 21-i) en ce qui concerne leur pertinence pour l'alimentation en énergie locale de l'installation d'alimentation en énergie (1), en particulier de manière pondérée en fonction de leur fiabilité, et transmet les messages d'événements (EM) filtrés et/ou prétraités, en particulier reformatés, à l'unité de commande (9) pour l'adaptation dynamique de la réserve d'énergie (ER) stockée dans ledit au moins un dispositif de stockage d'énergie local (8) de l'installation d'alimentation en énergie (1) et/ou pour l'adaptation dynamique du taux d'adaptation (AR) avec lequel la réserve d'énergie (ER) est adaptée.

11. Installation d'alimentation en énergie selon l'une des revendications 1 à 10 précédentes,
dans laquelle les messages d'événements (ME) présentent des messages qui sont pertinents pour le fonctionnement continu du réseau d'alimentation en énergie, EVN, en particulier des messages d'infrastructure concernant l'infrastructure publique et/ou l'infrastructure du réseau, qui proviennent d'un serveur d'un opérateur de réseau et/ou d'une autorité de construction, et/ou
dans laquelle les messages d'événements (EM) présentent des messages de prévisions météorologiques et/ou des messages d'alerte météorologique géoréférencés qui proviennent d'un serveur d'un service de prévisions météorologiques et/ou d'une compagnie d'assurance, et/ou
dans laquelle les messages d'événements (EM) présentent des messages concernant l'approvisionnement en combustibles qui proviennent d'un serveur d'un fournisseur de combustibles et/ou d'un service de renseignements.

12. Installation d'alimentation en énergie selon l'une des revendications 1 à 11 précédentes,
dans laquelle les messages d'événements (EM) présentent des données de capteurs et/ou des paramètres, en particulier des données de capteurs et/ou des paramètres des unités de production d'énergie locales (4-i), des données de capteurs et/ou des paramètres des unités de consommation d'énergie locales (7-i), des données de capteurs et/ou des paramètres des dispositifs de stockage d'énergie locaux (8-i) et/ou des données de capteurs et/ou des paramètres du réseau d'alimentation en énergie (2).

13. Unité de commande (9) pour une installation d'alimentation en énergie (1), qui est adaptée à prélever de l'énergie d'un réseau d'alimentation en énergie (2) ou à en injecter dans le réseau d'alimentation en énergie (2),
dans laquelle l'unité de commande (9) commande une consommation propre d'énergie (EEV) de l'énergie produite par au moins une unité de production d'énergie locale (4-i) de l'installation d'alimentation en énergie (1) par au moins une unité de consommation d'énergie locale (7-i) de l'installation d'alimentation en énergie (1) ainsi que la quantité d'énergie stockée dans au moins un dispositif de stockage d'énergie local (8) de l'installation d'alimentation en énergie, EVA, (1),
dans laquelle l'unité de commande (9), après avoir détecté au moins un événement futur prévisible, EV, qui influence la quantité d'énergie (E1) de l'énergie pouvant être produite par les unités de production d'énergie (4-i) et/ou la quantité d'énergie (E2) de l'énergie pouvant être prélevée du réseau d'alimentation en énergie (2) et/ou la quantité d'énergie (E3) de l'énergie consommée par les unités de consommation d'énergie (7-i), adapte dynamiquement, à titre préventif, une réserve d'énergie (ER) stockée dans ledit au moins un dispositif de stockage d'énergie local (8) en fonction des événements, EV, détectés avant la survenue de ces événements,
dans laquelle la réserve d'énergie stockée (ER) comprend une quantité d'énergie qui est réservée pour une situation d'alimentation de secours,
**caractérisée en ce que**
la réserve d'énergie stockée (ER) est influencée en fonction d'une probabilité de défaillance et d'une durée de défaillance.

14. Procédé pour mettre à disposition une réserve d'énergie (ER) dans une installation d'alimentation en énergie (1), comprenant les étapes suivantes :
- détection (S1) d'au moins un événement futur, EV, qui influence la quantité d'énergie (E1) de l'énergie pouvant être produite par une unité de production d'énergie (4-i) de l'installation d'alimentation en énergie (1) et/ou la quantité d'énergie (E2) de l'énergie pouvant être prélevée d'un réseau d'alimentation en énergie (2) par l'installation d'alimentation en énergie (1), E2, et/ou la quantité d'énergie (E3) de l'énergie consommée par des unités de consommation d'énergie (7-i) de l'installation d'alimentation en énergie (1) ;
- réglage (S2) de la réserve d'énergie (ER) stockée dans au moins un dispositif de stockage d'énergie local (8) de l'installation d'alimentation en énergie (1) en fonction des événements futurs (EV) détectés avant leur survenue,
la réserve d'énergie stockée (ER) comprenant une quantité d'énergie qui est réservée pour une situation d'alimentation de secours,
**caractérisé en ce que**
la réserve d'énergie stockée (ER) est influencée en fonction d'une probabilité de défaillance et d'une durée de défaillance.

15. Procédé selon la revendication 14,
dans lequel la réserve d'énergie (ER) stockée est en outre réglée en fonction d'une configuration instantanée de l'installation d'alimentation en énergie (1).

16. Procédé selon la revendication 14 ou 15,
dans lequel, lorsque la réserve d'énergie (ER) est réglée, une consommation propre d'énergie (EEV) de la quantité d'énergie produite par les unités de production d'énergie locales (4-i) de l'installation d'alimentation en énergie (1) par les unités de consommation d'énergie locales (7-i) de l'installation d'alimentation en énergie (1) est maximisée.

17. Procédé selon l'une des revendications 14 à 16, dans lequel le réseau d'alimentation en énergie (2) est surveillé en ce qui concerne sa fréquence et/ou ses harmoniques et dans lequel, si une défaillance de réseau possible du réseau d'alimentation en énergie (2) est détectée, la réserve d'énergie (ER) est adaptée.
